# EUROPÄISCHE PATENTSCHRIFT

(11) **EP 0 512 382 B1**
(45) Veröffentlichungstag und Bekanntmachung des Hinweises auf die Patenterteilung: **02.11.1995**
(21) Anmeldenummer: 92107269.0
(22) Anmeldetag: 29.04.1992
(51) Int. Cl.: A47C 7/26, B29C 44/00

(54) **Sitz, insbesondere Sitzpolster für öffentliche Verkehrsmittel**
Seat, especially seat cushion for public transport
Siège, notamment siège rembourré pour transport commun

(30) Priorität: 06.05.1991 AT 942/91; 30.03.1992 AT 639/92
(43) Veröffentlichungstag der Anmeldung: 11.11.1992
(73) Patentinhaber: C.A. GREINER & SÖHNE GESELLSCHAFT M.B.H., A-4550 Kremsmünster (AT)
(72) Erfinder: Eder, Bernhard, A-4020 Linz/Donau (AT)
(74) Vertreter: Secklehner, Günter, Dr.

(56) Entgegenhaltungen:
- DE-A- 2 103 582
- FR-A- 2 613 345
- US-A- 4 247 347
- US-A- 4 904 541

## Beschreibung

Die Erfindung betrifft einen Sitz mit einem Sitzpolster, wie er im Oberbegriff des Patentanspruches 1 beschrieben ist.

Es ist ein gegen Einschnitte widerstandsfähiger Schaumstoffgegenstand - gemäß DE-A-21 03 582, die den Obergegriff des Anspruches 1 repräsentiert, bekannt, bei welchem das Aufschlitzen bzw. Einschneiden von insbesondere Schaumstoffsitzen verhindert bzw. erschwert werden soll. Dabei wird die aus einem Drahtgeflecht bzw. aus Metallfasern bestehende Schutzschichte für die Herstellung des Schaumstoffgegenstandes in eine Form an deren Formoberflächen verbracht und dort positioniert gehaltert und anschließend der Formhohlraum mit Kunststoffschaum gefüllt. Bei diesem Schäumvorgang wird das Drahtgeflecht bzw. werden die einzelnen Metallfasern in den Kunststoffschaum an dessen Oberfläche eingebettet und sind mit diesem somit bewegungsverbunden. Dadurch erreicht man einen relativ zerstörungsfesten Schaumstoffgegenstand mit brauchbarem Sitzkomfort.

Ebenfalls sind bereits verschiedene Sitzpolster, z.B. gemäß EP-A-0 190 064, die den Oberbegriff des Anspruches 14 repräsentiert, insbesondere für öffentliche Verkehrsmittel bekannt geworden, bei welchen ein Sitz neben dem Sitzpolster ein diesen aufnehmendes Traggestell, insbesondere aus Metall, aufweist, welches am Fußboden des Verkehrsmittels, insbesondere eines Eisenbahnwaggons, festgeschraubt ist. Bedingt durch die immer größer werdenden Schäden durch Vandalen wurde bereits vorgesehen, daß Sitzpolster, die ein Stützelement aus Kunststoffschaum, welches mit einem Bezugstoff umhüllt ist, aufweisen, mit einer zwischen diesen angeordneten Schutzschicht, insbesondere einem Metallgewebe, verstärkt werden, um zu verhindern, daß die Vandalen mit spitzen Gegenständen bzw. Messern den gesamten Sitzpolster einfach zerstören können. Diese meist aus einem Metallnetz bzw. Gewirke oder einer Metallmatte bestehende Schutzschicht zwischen dem Bezugstoff und dem Stützelement wurde entweder lose eingelegt oder über eine Kleberschicht mit dem Bezugstoff und dem Stützelement bewegungsverbunden.

Weiter ist es auch bereits bekannt - gemaß WO-A-87/06894 - einen Sitzpolster für einen Sitz in einem öffentlichen Verkehrsmittel aus mehreren Schichten herzustellen, der beispielsweise durch ein mit einem Flammschutzmittel versehenes Stützelement aus Kunststoffschaum und einen dieses umhüllenden, schwer entflammbaren Bezugstoff bestehen. Zwischen dem Bezugstoff und dem Stützelement kann eine durch eine feuchtigkeitsdichte Sperrfolie gebildete Zwischenschicht angeordnet sein, sodaß das aus einem mit einem pulverförmigen Flammschutzmittel versetzten Kunststoffschaum bestehende Stützelement auf diese Zwischenschicht aufgeschäumt werden kann. Wird dabei die Zwischenschicht als feuchtigkeitsdichte Sperrfolie ausgebildet, so kann selbst beim Einbringen des Kunststoffschaums in flüssiger Form ein Eindringen desselben in das Gewebe des Bezugstoffes verhindert und damit ein günstiges Sitzklima aufrecht erhalten werden. Wird bei einem derartigen Sitzpolster der Bezugstoff durchgeschnitten bzw. aufgerissen oder aufgeritzt, so dehnt sich der Kunststoffschaum, der durch den Bezugstoff vorgespannt ist, geringfügig aus und die Schnittenden des Bezugstoffes klaffen auseinander, sodaß das darunterliegende, weiche Kunststoffmaterial des Stützelementes bis an die Sitzoberfläche vorragt. Dadurch wird eine gesamte Zerstörung des Sitzes beschleunigt bzw. beginnt sich nach kurzer Zeit auch beim normalen Fahrgastbetrieb der Bezugstoff im Randbereich der Schnittstelle von dem Stützelement zu lösen, und der Sitzpolster ist nach kurzer Zeit völlig zerstört und muß ausgetauscht werden.

Der vorliegenden Erfindung liegt die Aufgabe zugrunde, einen Sitzpolster für einen Sitz eines öffentlichen Verkehrsmittels zu schaffen, der einer Zerstörung durch Vandalen einen hohen Widerstand entgegensetzt und die weitere Verwendung eines Sitzpolsters auch dann, wenn der Bezugstoff durch scharfe Gegenstände zerschnitten wurde, ermöglicht.

Diese Aufgabe der Erfindung wird durch die im Kennzeichenteil des Patentanspruches 1 angegebenen Merkmale gelöst. Die überraschenden, nicht vorhersehbaren Vorteile dieser Lösung liegen darin, daß durch die Anordnung der Schutzschicht unmittelbar im Trennbereich zwischen dem Stützelement eines Tragkörpers und einem Verkleidungselement auch bei Beanspruchung des Verkleidungselementes, insbesondere des Bezugstoffes mit scharfen Gegenständen, wie Messern, ein Durchdringen bzw. eine Zerstörung des Verkleidungselementes nur bis zur Schutzschicht möglich ist und bedingt durch die geringe Dicke dieses Verkleidungselementes ein Aufplatzen des Sitzpolsters in diesem Bereich vermieden wird. Dazu kommt, daß aber nunmehr in überraschender Weise durch diese Anordnung der Schutzschicht im Trennbereich zwischen dem Tragkörper und dem Verkleidungselement eine lösbare Verbindung zwischen dem Verkleidungselement und dem Tragkörper geschaffen werden kann, die es ermöglicht, das Stützelement des Sitzpolsters unter Wahrung der dadurch erzielten Kostenvorteile nach den bisher bekannten Verfahrensmethoden durch Hinterschäumen des Verkleidungselementes herzustellen und gleichzeitig ermöglicht, daß durch den Schutz des Tragkörpers durch die Schutzschicht im Falle der Zerstörung des Verkleidungselementes dieses vom Tragkörper abgelöst und durch ein neues Verkleidungselement ersetzt werden kann. Damit wird nicht nur bei Zerstörung des Bezugstoffes durch Schnittwerkzeuge, sondern auch bei starker Verschmutzung des Bezugstoffes, wie diese in öffentlichen Verkehrsmitteln oft auftritt, ein kostengünstiger Teilaustausch des Sitzpolsters möglich.

Eine weitere bevorzugte Ausführungsform ist im Patentanspruch 2 beschrieben. Durch diese weitere Zwischenschicht wird der Sitzkomfort auch auf solchen vandalensicheren Sitzpolstern verbessert und ein besseres Sitzklima geschaffen. Des weiteren wird ein Einreißen des Bezugstoffes durch die geringfügig elastische Nachgiebigkeit desselben gegenüber der Schutzschicht bei Belastungen mit scharfen Kanten bzw. Gegenständen zusätzlich verringert.

Vorteilhaft ist weiters eine Ausführungsform nach Patentanspruch 3, da dadurch ein rasches Lösen und Wiederaufsetzen des Verkleidungselementes auf den Tragkörper ermöglicht wird.

Eine andere Weiterbildung ist im Patentanspruch 4 beschrieben. Durch eine günstige Abstimmung der Maschenweite des Netzes bzw. Gitters kann der Kraftaufwand für das Ablösen des Verkleidungselementes vom Tragkörper in vorteilhafter Weise beeinflußt werden, wobei eine nicht zu geringe Maschenweite das ausreichende Durchtreten eines flüssigen Kunststoffmaterials in Richtung der Zwischenschicht ermöglichen und andererseits das Ausreißen von großflächigen Teilen aus dem Tragkörper beim Ablösen des Verkleidungselementes verhindert werden soll.

Eine andere vorteilhafte Merkmalskombination beschreibt Patentanspruch 5, da dadurch eine einfach zu verarbeitende Einheit für das Verkleidungselement geschaffen wird.

Vorteilhaft ist auch eine Ausführungsvariante nach Patentanspruch 6, da dadurch ein guter Mittelweg zwischen einem Minimum an Sitzkomfort und einem Verhindern des Aufplatzens im Bereich von Schnitten durch den Bezugstoff erreicht wird.

Vorteilhaft ist auch eine Ausbildung nach Patentanspruch 7, da dadurch eine ausreichende Elastizität zwischen der Schutzschicht und dem Bezugstoff sichergestellt wird.

Es ist auch eine Ausgestaltung nach Patentanspruch 8 möglich, wodurch ein guter Zusammenhalt des Verkleidungselementes beim Ablösen vom Tragkörper einerseits und ein guter Schutz der Zwischenschicht bzw. des Bezugstoffes beim Aufbringen des Kunststoffschaums für den Tragkörper in flüssiger Form erreicht wird.

Von Vorteil ist auch eine andere Weiterbildung nach Patentanspruch 9, da dadurch die Herstellung des Verbindungselementes vereinfacht wird.

Eine andere Ausführungsvariante ist im Patentanspruch 10 beschrieben, wodurch beim Herstellen des Tragkörpers eine Positionierung der Schutzschicht im Bereich des Verkleidungselementes einfach sichergestellt werden kann.

Vorteilhaft ist aber auch eine Ausgestaltung nach Patentanspruch 11, da dadurch eine Zerstörung des Tragkörpers auch auf der von der Sitzfläche abgewendeten Seite her nur schwer möglich ist.

Bei einer Ausbildung nach Patentanspruch 12 ist von Vorteil, daß eine gleichmäßige Dicke und eine glatte Oberfläche des Kaschierschaums unter Belastung erzielbar ist.

Von Vorteil ist aber auch eine Ausführungsvariante nach Patentanspruch 13, da dadurch eine vorzeitige Abnutzung des Bezugstoffes im Kantenbereich zuverlässig verhindert wird.

Eine besonders vorteilhafte, insbesondere unabhängige Weiterbildung für einen Sitz mit einem Sitzpolster gemäß dem Oberbegriff des Patentanspruches 14 ist im Kennzeichenteil des Patentanspruches 14 beschrieben.

Die überraschenden Vorteile dieser Lösung liegen darin, daß durch die Anordnung der Schutzschicht in der Zwischenschicht zwischen dem Stützelement eines Tragkörpers und einem Verkleidungselement auch bei Beanspruchung des Verkleidungselementes, insbesondere des Bezugstoffes mit scharfen Gegenständen, wie Messern ein Durchdringen bzw. eine Zerstörung des Verkleidungselementes nur bis zur Schutzschicht möglich ist und bedingt durch die geringe Dicke dieses Verkleidungselementes und den hohen elastischen Rückstellkoeffizienten der Zwischenschicht ein Aufplatzen des Sitzpolsters in diesem Bereich vermieden wird. Dazu kommt, daß aber nunmehr in überraschender Weise durch diese Anordnung dieser Zwischenschicht eine lösbare Verbindung zwischen dem Bezugstoff und dem Tragkörper geschaffen werden kann, die es ermöglicht, das Stützelement und gegebenenfalls auch die Zwischenschicht des Sitzpolsters unter Wahrung der dadurch erzielten Kostenvorteile nach den bisher bekannten Verfahrensmethoden durch Hinterschäumen des Verkleidungselementes herzustellen, und gleichzeitig ermöglicht, daß durch den Schutz des Tragkörpers durch die Schutzschicht im Falle der Zerstörung des Verkleidungselementes dieses abgelöst und durch ein neues Verkleidungselement ersetzt werden kann. Damit wird nicht nur bei Zerstörung des Bezugstoffes durch Schnittwerkzeuge, sondern auch bei Starker Verschmutzung des Bezugstoffes, wie diese in öffentlichen Verkehrsmitteln oft auftritt, ein kostengünstiger Teilaustausch des Sitzpolsters möglich.

Eine weitere bevorzugte Ausführungsform ist im Patentanspruch 15 beschrieben. Durch das Einbringen von Füllmaterialien, die zum Teil aus Kreide und zum Teil aus Altkunststoffen, also sogenannten Recyclingkunststoffen, wie sie dem Industrie- bzw. Hausmüll entnommen sind, bestehen, kann eine spezielle Elastizität bzw. eine entsprechend starke Rückstellkraft der Zwischenschicht erreicht werden, sodaß nach dem Eindringen von Messern bzw. von spitzen Gegenständen sich die dadurch erzeugten Öffnungen nach dem Herausziehen des Zerstörungselementes von selbst wieder schließen.

Die Weiterbildung nach Patentanspruch 16 ermöglicht eine entsprechende Ausbildung der Zwischenschicht, die sowohl den für den Sitzaufbau benötigten Elastizitätseigenschaften als auch den entsprechenden Belastungen gerecht wird und in überraschender Weise durch die Verwendung dieser Materialien eine hartgummiähnliche Materialkonsistenz erreicht wird, die für den vorliegenden Anwendungsfall besondere Vorteile bietet.

Eine Ausführungsvariante nach Patentanspruch 17 und 18 ermöglicht auch eine flammhemmende Einstellung der Sitzpolster, sodaß diese ohne Probleme mit den entsprechenden Vorschriften auch in Fahrzeugen verwendet werden können.

Die Weiterbildung nach Patentanspruch 19 ermöglicht, daß auch bei massiven Vandalismuseingriffen eine Totalzerstörung des Sitzpolster verhindert wird.

Ein tiefes Eindringen von Werkzeugen der Vandalen wird durch die Ausführungsform nach Patentanspruch 20 verhindert, wobei die Verwendung von Glasfasern bzw. -fäden eine totale Wiederverwertung auch von beschädigten Zwischenschichten ermöglicht.

Vorteilhaft ist auch eine Ausgestaltung nach Patentanspruch 21, da dadurch ohne weitere Maßnahmen eine weitere Schutzschicht direkt über den Kunststoffschaum des Tragkörpers an der Zwischenschicht angeformt werden kann.

Die Ausbildung nach Patentanspruch 22 verhindert eine bleibende Verformung der Schutzschicht durch Extrembelastungen durch Vandalen, sodaß der Sitzkomfort auch bei starker und länger andauernder Sitzbelastung nicht leidet.

Durch die vorteilhafte Weiterbildung nach Patentanspruch 23 kann die Ablösekraft zwischen der Zwischenschicht und dem Tragkörper, bedingt durch die Versteifung der Oberfläche des Tragkörpers und die Verringerung der tragfähigen Klebefläche durch die Maschenweite der Schutzschicht den unterschiedlichen Erfordernissen einfach angepaßt werden.

Durch die weitere Ausgestaltung nach Patentanspruch 24 kann der Einbau einer feuchtigkeits- bzw. flüssigkeitsdichten Sperrfolie zwischen der Zwischenschicht und dem Tragkörper eingespart werden.

Vorteilhaft ist auch eine Ausgestaltung nach Patentanspruch 25, da dadurch ein einstückiges Ablösen des beschädigten Bezugstoffes in kurzer Zeit möglich ist und so eine Mehrfachverwendung des Tragkörpers gewährleistet werden kann.

Die Ausführungsvariante nach Patentanspruch 26 ermöglicht einen einfachen Herstellungsvorgang des Tragkörpers für einen derartigen Sitzpolster, da die bereits vorgeformte Zwischenschicht ein Durchdringen des eingebrachten Schaummaterials zum Bezugstoff wirksam verhindert.

Die Weiterbildung nach Patentanspruch 27 ermöglicht ein relativ einfaches Entfernen des Bezugstoffes von der Zwischenschicht, falls der Bezugstoff aufgrund von Zerstörungen gewechselt werden muß bzw. dieser einer Reinigung zu unterziehen ist.

Von Vorteil ist aber auch eine Ausgestaltung nach Patentanspruch 28, da bei einer Zerstörung des Bezugstoffes, welcher mit der Zwischenschicht verbunden ist, die Schnittränder bestrebt sind, sich wieder zu schließen und somit es zu keinem weiteren Aufplatzen bzw. weiteren Einreißen des Bezugstoffes kommt.

Von Vorteil ist weiters auch ein Verfahren zur Herstellung eines Sitzpolsters für einen Sitz, wie er im Oberbegriff des Patentanspruches 29 beschrieben ist.

Dieses Verfahren ist durch die Maßnahmen im Kennzeichenteil des Patentanspruches 29 gekennzeichnet. Der Vorteil dieses Herstellungsverfahrens liegt darin, daß bedingt durch die Kleberschicht der Verbindungsvorrichtung zwischen dem Verkleidungselement und dem Tragkörper sowohl das Herstellverfahren vereinfacht wird, als auch ein Mehrfachnutzen des Tragkörpers durch die Möglichkeit des Austausches des Verkleidungselementes geschaffen wird.

Eine andere Vorgangsweise kennzeichnet Patentanspruch 30, wodurch die Verbindung von mehreren Schichten durch die während des Spritz- bzw. Schäumvorgangs auftretenden chemischen Reaktionen ohne zusätzliche Arbeitsvorgänge erreicht werden kann.

Von Vorteil ist auch ein Vorgehen nach Patentanspruch 31, da dadurch überflüssiger Platz bei der Lagerhaltung eingespart werden kann.

Schließlich ist auch ein Vorgehen nach Patentanspruch 32 von Vorteil, da dadurch bei vertretbarem Gewicht eine ausreichende Festigkeit des Tragkörpers erzielt wird, die ein Ablösen des Verkleidungselementes ohne Zerstörung desselben ermöglicht.

Zum besseren Verständnis der Erfindung wird diese im nachfolgenden anhand der in den Zeichnungen dargestellten Ausführungsbeispiele näher erläutert:

Es zeigen:
- Fig. 1: einen Sitz in einem öffentlichen Verkehrsmittel mit einer erfindungsgemäß ausgebildeten Polsterung in schaubildlicher und vereinfachter, schematischer Darstellung;
- Fig. 2: einen Teil des Sitzpolsters nach Fig.1 in schematischer, schaubildlicher Darstellung, teilweise geschnitten;
- Fig. 3: den Sitzpolster nach Fig.1 in Draufsicht;
- Fig. 4: den Sitzpolster nach Fig.3 mit Teilen des diesen zugeordneten Traggestells in Seitenansicht, geschnitten, gemäß den Linien IV-IV in Fig.3;
- Fig. 5: einen Teil eines Sitzpolsters nach Fig.1 in einer anderen Ausführungsform in schematischer, schaubildlicher Darstellung, teilweise geschnitten;
- Fig. 6: einen Teil des Sitzpolsters nach Fig.1, in schematischer, schaubildlicher Darstellung, teilweise geschnitten, mit einem anderen Schichtaufbau;
- Fig. 7: den Sitzpolster nach Fig.6 in Stirnansicht geschnitten;
- Fig. 8: eine andere Ausführungsvariante des erfindungsgemäßen Sitzpolsters in Stirnansicht geschnitten;
- Fig. 9: die Zwischenschicht des Sitzpolsters nach Fig.8 vor der thermischen Verdichtung, in Stirnansicht geschnitten und vereinfachter, schematischer Darstellung;
- Fig.10: die Zwischenschicht nach Fig.9 nach der thermischen Verdichtung und dem Einbetten der Schutzschicht, in Stirnansicht geschnitten und stark vereinfachter schematischer Darstellung.

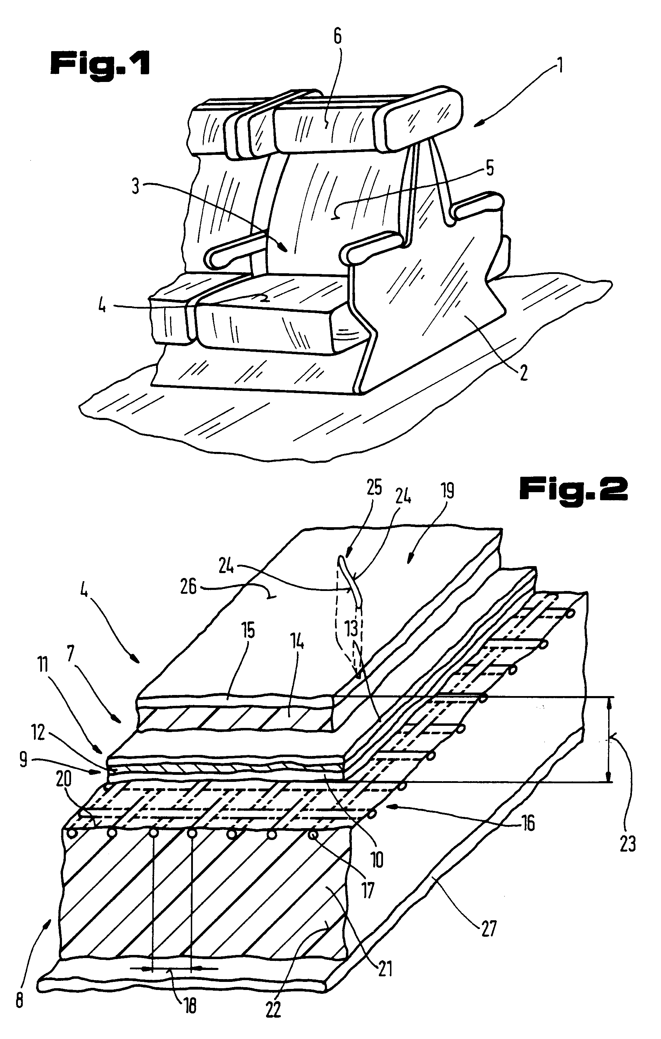

In Fig.1 ist ein Sitz 1, beispielsweise in einem öffentlichen Verkehrsmittel, wie einer Straßenbahn, einem Eisenbahnwaggon oder einem Autobus, dargestellt. Dieser Sitz 1 besteht aus einem Traggestell 2 und einer aus mehreren Schichten bestehenden Polsterung 3, die, wie beim dargestellten Ausführungsbeispiel einen Sitzpolster 4, einen Rückenpolster 5 und einen Kopfpolster 6 umfassen kann. Jeder dieser Sitzpolster, Rückenpolster und Kopfpolster 4,5 bzw. 6 besteht aus mehreren Schichten.

In Fig.2 ist ein Teil des Sitzpolsters 4 schematisch vereinfacht und zum besseren Verständnis des Schichtaufbaues mit gegeneinander versetzten Schichten dargestellt. Aus dieser Darstellung ist zu ersehen, daß der Sitzpolster 4 aus einem Verkleidungselement 7 und einem Tragkörper 8 besteht. Die Verbindung zwischen dem Verkleidungselement 7 und dem Tragkörper 8 erfolgt über eine lösbare Verbindungsvorrichtung 9, die im vorliegenden Fall bevorzugt durch eine Selbstklebeschicht 10 gebildet ist. Diese Selbstklebeschicht 10 ist Teil einer Zwischenschicht 11, die auch eine flüssigkeitsdichte Sperrfolie 12 umfaßt, auf der diese Selbstklebeschicht 10 aufgebracht ist. Eine weitere Oberfläche dieser Sperrfolie 12 ist ebenfalls mit einer Kleberschicht 13 beschichtet und über diese mit einer Schicht 14, insbesondere durch einen Kaschiervorgang verbunden. Diese Schicht 14 der Zwischenschicht 11 kann beispielsweise aus einem Polyethylenschaum, einem Polyester- oder Polystyrolschaum gebildet sein. Der Kunststoff dieser Schicht kann, wenn dies als notwendig oder vorteilhaft erachtet wird, mit einem Flammschutzmittel getränkt bzw. versetzt sein. Diese Schicht 14 der Zwischenschicht 11 ist auf einen Bezugstoff 15 bevorzugt durch einen Kaschiervorgang unter Wärme- und Druckeinwirkung aufgebracht.

Der Tragkörper 8, der über die Verbindungsvorrichtung 9 mit dem Verkleidungselement 7 verbunden ist, umfaßt eine Schutzschicht 16, beispielsweise ein Gitter 17 aus Metall, wie insbesondere Federstahl bzw. Federstahldrähten. Es kann jedoch auch ein Metallnetz bzw. ein Metallgewirke bzw. -gewebe verwendet werden, wobei das die Schutzschicht 16 bildende Bauelemente bevorzugt plastisch räumlich verformbar sein soll. Des weiteren ist es vorteilhaft, wenn diese Gitter bzw. Netze eine Maschenweite 18 aufweisen, die zwischen 2 mm und 10 mm, bevorzugt 5 mm beträgt. Durch die Wahl der Maschenweite 18 kann die Querschnittsfläche über die, die Sperrfolie 12 am Tragkörper 8 anhaftet, reguliert werden. Durch das Verhältnis zwischen der durch das Gitter bzw. Netz oder Gewirke aus Metall oder Glas versteiften Querschnittsfläche und jener Querschnittsfläche, an der die Sperrfolie 12 direkt mit dem Schaumstoff des Tragkörpers 8 verbunden ist, kann die Ablösekraft variiert werden, da sich der Schaum von den steifen Materialien der Schutzschicht 16 leichter löst bzw. eine vordefinierte Ablöseebene gegeben ist, von der sich der Schaumstoff abhebt, während durch die Größe der Maschenweite verhindert werden kann, daß beim Ablösen der Sperrfolie 12 in den Tragkörper 8 hineinragende Teile mit herausgerissen werden. Damit wird neben dem erzielten Verstärkungseffekt eine glatte Trennebene bei einem schaumartigen Tragmaterial erreicht, sodaß das Ablösen von beschädigten Verkleidungselementen 7 ohne Zerstörung des Tragkörpers 8 möglich wird und die Auflagefläche für ein neu aufzubringendes Verkleidungselement 7 ausreicht, um ein entsprechend festes Anhaften, und über die Fläche ein durchgehendes Verbinden des neuen Verkleidungselementes 7 mit dem Tragkörper 8 zu ermöglichen.

Die Schutzschicht 16 ist in eine einer Sitzfläche 19 des Sitzpolsters 4 zugewandte Auflagefläche 20 eines Stützelementes 21 des Tragkörpers 8 eingeschäumt, wobei ein Kunststoffschaum 22 - schematisch durch die Schraffur angedeutet - die Öffnungen im Gitter 17 bzw. Netz durchdringt und die ebene Auflagefläche 20 mit den in Richtung des Verkleidungselementes 7 am weitesten vorragenden Teilen der Schutzschicht 16 bildet.

Diese Ausbildung des Tragkörpers 8 ermöglicht gleichzeitig aber auch eine kostengünstige Herstellung des Sitzpolsters 4. Durch den Aufbau der Zwischenschicht 11 und der Schutzschicht 16 ist es nunmehr nämlich möglich, ohne eine nachteiligen Beeinflussung des Bezugstoffes 15 den Tragkörper 8 durch einen Schäum- bzw. Spritzvorgang direkt auf die Zwischenschicht 11 aufzubringen. Damit wird die Schutzschicht 16, nämlich das Gitter bzw. Netz aus Metall in den Kunststoffschaum 22 des Tragkörpers 8 eingebettet und bildet gleichzeitig eine verstärkte Randzone gegenüber der Zwischenschicht 11. Diese Zwischenschicht hat neben der Abdichtung, die ein Eindringen des flüssig eingebrachten Schäummittels in den Bezugstoff 15 verhindert, auch noch den Vorteil, daß durch die Anordnung der Schicht 14 das Sitzgefühl und das Sitzklima durch eine Mindestelastizität angenehm gestaltet wird, ohne daß es beim Zerschneiden des Bezugstoffes 15 zu einem Aufplatzen desselben kommt. Andererseits wird dadurch auch die auf den Bezugstoff 15 einwirkende Scheuerbelastung durch die Schutzschicht 16 erheblich verringert, sodaß ein Durchscheuern des Bezugstoffes 15 auch in den Kantenbereichen des Sitzpolsters 4 zuverlässig verhindert ist.

Bei entsprechender Auslegung der Haftungseigenschaften der Selbstklebeschicht 10 ist es nunmehr auch möglich, das Verkleidungselement 7 ohne Zerstörung des Tragkörpers 8 von diesem abzulösen. Diese überraschend vorteilhafte Lösung wird dadurch erreicht, daß die Randzone des Tragkörpers 8 durch das eingearbeitete Gitter 17 bzw. Netz oder Gewirke so verstärkt ist, daß lediglich ein Abheben der Randschichten des Tragkörpers 8 beim Abreißen der Selbstklebeschicht 10 erfolgt. Die Grundstruktur des Tragkörpers 8 wird durch die Schutzschicht 16 aufgrund der Verstärkung durch diese Schutzschicht 16 zurückgehalten.

Diese Ausführungsvariante bietet daher den Vorteil, daß nach Ablösen des Verkleidungselementes 7 unter Verwendung einer derartigen Selbstklebeschicht 10 ein neues Verkleidungselement 7 aufgebracht werden kann. Damit ist es möglich, den Tragkörper 8 des erfindungsgemäßen Sitzpolsters mehrfach zu verwenden und nur bei einer Zerstörung des Bezugstoffes 15 durch Vandalen oder bei übermäßiger Verschmutzung oder Abnutzung des Bezugstoffes 15 ist nur das Verkleidungselement 7 zu tauschen. Dadurch wird der Gesamtaufwand für solche insbesondere im Nahverkehr eingesetzte Sitzpolster 4 über längere Zeiträume betrachtet gering gehalten.

Dazu kommt, daß durch diese rasche Möglichkeit des Austausches übermäßig stark verschmutzte Verkleidungselemente 7 zwischendurch auch vom Tragkörper 8 abgelöst und zentral gereinigt werden können, um sie danach beispielsweise nach Aufbringen einer neuen Kleberbeschichtung als Selbstklebeschicht 10 wieder auf einen Tragkörper 8 aufzubringen.

Gleichzeitig wird aber durch eine geringe Schichtdicke 23 des Verkleidungselementes 7 ein Aufplatzen des Bezugstoffes 15 dann verhindert, wenn dieser mit scharfen Gegenständen bzw. einem Messer aufgeritzt bzw. zerschnitten wird. Durch die geringe Schichtdicke 23 im Bereich von 0,2 mm bis 2 mm, bevorzugt 0,5 mm bis 1 mm ist die elastische Vorspannkraft, die zu einem Hochheben des Bezugstoffes 15 an den Schnitträndern 24 eines Schnittes 25 führt, so gering, daß die Schnittränder 24 des Schnittes 25 in einer zueinander im wesentlichen parallelen Lage verbleiben. Durch die Schutzschicht 16 wird nämlich ein tieferes Eindringen auch von scharfen Schnittwerkzeugen wie Messern und dgl. verhindert, sodaß auch bei größter Gewaltanwendung ein tieferes Zerstören der Struktur des Tragkörpers 8 und ein Freigeben der innewohnenden Elastizität verhindert ist. Dies nicht zuletzt dadurch, da auch der Kunststoffschaum 22 des Tragkörpers 8 durch den Rückhalt über die Schutzschicht 16 kein Hochdrücken der Schnittränder 24 in Richtung einer Sitzfläche 26 des Sitzpolsters 4 bewirken kann.

Wie weiters aus der Darstellung in Fig.2 ersichtlich, kann der Tragkörper 8 auf der vom Verkleidungselement 7 abgewendeten Seite mit einer Abdeckschicht 27 z.B. aus einem Silikonkautschukschaum versehen sein. Diese verhindert eine Abnutzung der von der Sitzfläche 26 abgewendeten Seite des Tragkörpers 8 bei seiner Auflage am Traggestell 2, sodaß die Schaumstruktur des Tragkörpers 8 nicht nach außen hin austreten kann, wodurch auch die flamm- bzw. brandhemmenden Eigenschaften des Sitzpolsters 4 verbessert werden können.

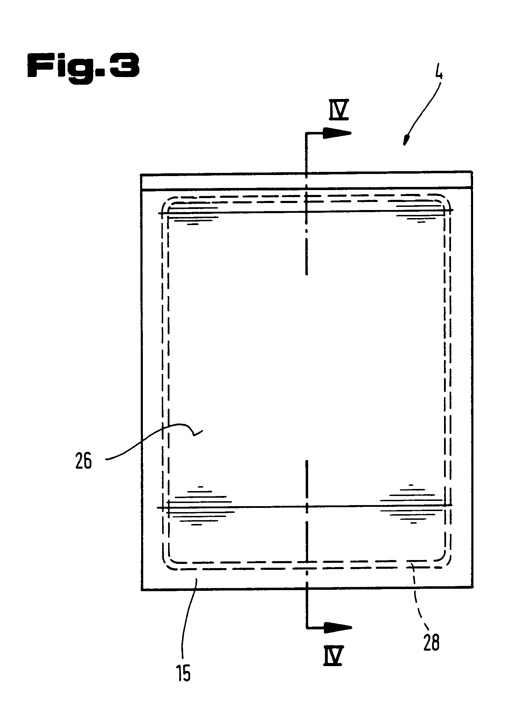

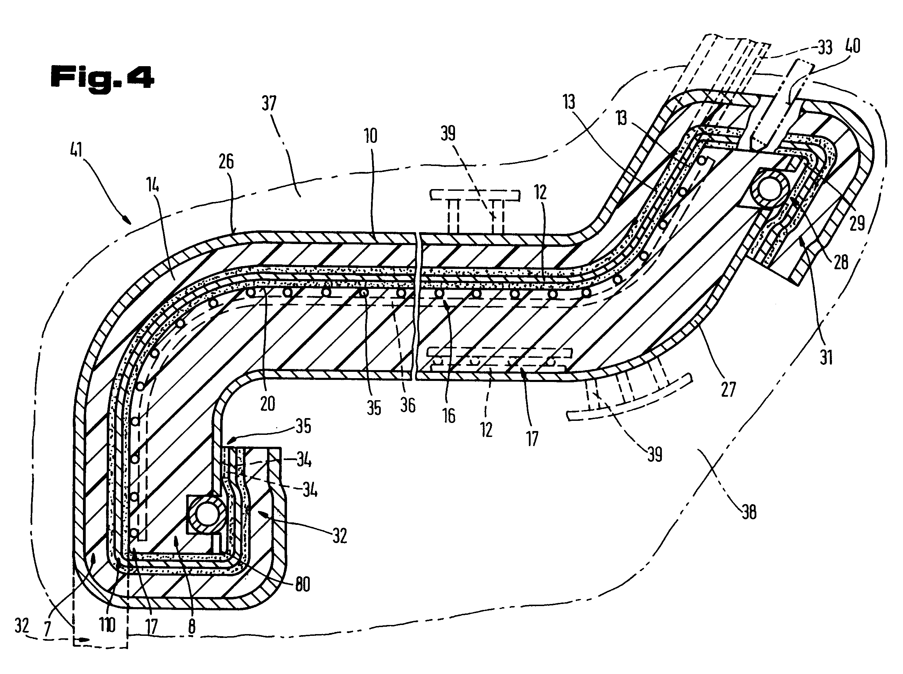

In den Fig.3 und 4 ist ein Sitzpolster 4 dargestellt, der wiederum aus einem Verkleidungselement 7 mit einer Zwischenschicht 11 und einem Tragkörper 8 sowie einer Abdeckschicht 27 gebildet ist. Das Verkleidungselement 7 ist auf einer der Sitzfläche 26 zugewandten Oberfläche mit einem Bezugstoff 15 umhüllt, der beim Einsatz in öffentlichen Verkehrsmitteln flamm- bzw. brandhemmend oder nicht brennbar ausgeführt sein kann.

Der Tragkörper 8 mit dem darauf angeordneten Verkleidungselement 7 wird zur Montage im Traggestell 2 in einen Tragrahmen 28, z.B. einen umlaufenden Metallrohrrahmen, eingelegt, der seinerseits im Traggestell 2 befestigt ist. Über Stirukanten 29 bzw. 30 vorragende Lappen 31 bzw. 32 werden nach dem Auflegen des Sitzpolsters 4 auf den Tragrahmen 28 um diesen herumgeschlagen und nach Ablösen einer während des Aufbringens des Tragkörpers 8 auf das Verkleidungselement 7 im Bereich der Lappen 31 bzw. 32 verbleibenden Abdeckfolie 33 mit der Abdeckschicht 27 verklebt. Auch durch diese weitere Maßnahme wird sichergestellt, daß zum Austausch des Verkleidungselementes 7 die Verbindung mit dem Tragrahmen 28 rasch und ohne Beschädigung des Tragkörpers 8 gelöst werden kann.

Selbstverständlich ist es auch möglich, daß auf der Abdeckschicht 27 und am Lappen 31 bzw. 32, wie mit strichlierten Linien in Fig.4 beim Lappen 32 angedeutet, Klettbänder 34 einer Verbindungsvorrichtung 35 angeordnet sein können, um die vorragenden Lappen 31, 32 mit der Abdeckschicht 27 nach Umhüllen des Tragrahmens 28 kraftschlüssig zu verbinden.

Aus dieser Darstellung ist weiters zu ersehen, daß Gitterstäbe 36 der durch das Gitter 17 gebildeten Schutzschicht 16 mit der Auflagefläche 20 des Tragkörpers 8 abschließen, während die quer zu den Gitterstäben 36 verlaufenden Gitterstäbe 36 voll in den Kunststoffschaum 22 des Tragkörpers 8 eingebettet und damit sicher in diesem verankert sind. Diese Verankerung und die dadurch erzielte Verfestigung des Randbereiches des Tragkörpers 8 ermöglicht dann das Ablösen des Verkleidungselementes 7 von der Auflagefläche 20 des Tragkörpers 8.

Ein weiterer Vorteil dieser Ausführungsform liegt auch darin, daß, wie schematisch in Fig.4 durch strich-punktierte bzw. strich-zwei-punktierte Linien angedeutet, beim Einlegen des Verkleidungselementes 7 in einen Formteil 37 unter Zuhilfenahme dieser Selbstklebeschicht 10 die Schutzschicht 16 bzw. das Gitter 17 im Formteil 37 fixiert werden kann.

Dies erfolgt derart, daß die Schutzschicht 16 durch räumliche Verformung in etwa an die Raumform des Verkleidungselementes 7 angepaßt und auf die Selbstklebeschicht 10 aufgelegt wird. Durch die Haftkraft der Selbstklebeschicht 10 wird verhindert, daß die Schutzschicht 16 bzw. das Gitter 17 während des Einbringens des Kunststoffschaums zur Herstellung des Tragkörpers 8 aufschwimmen bzw. sich vom Verkleidungselement lösen kann. Dies ermöglicht aber andererseits, daß die Schutzschicht 16 exakt im Bereich der Auflagefläche 20 des Tragkörpers 8 verbleibt, um den zuvor beschriebenen Effekt der Verstärkung des Tragkörpers 8 in diesem Bereich sicherzustellen.

Nach dem Einlegen des Verkleidungselementes 7 wird zuerst in jenem Bereich, in welchem die Schutzschicht 16 bzw. das Gitter 17 aufgelegt wird, die Abdeckfolie 33 entfernt und danach das Gitter aufgelegt. Danach wird die Form mittels einer Formhälfte 38 geschlossen und die überstehenden Lappen 31 und 32 werden dabei zwischen dem Formteil 37 und der Formhälfte 38 eingespannt, worauf der den Tragkörper 8 bildende Kunststoffschaum eingebracht wird.

Zum Fixieren des Verkleidungselementes 7 im Formteil 37 können ebenso, wie zum Frieren der Abdeckschicht 27 in der Formhälfte 38 an einigen Stellen schematisch angedeutete Saugöffnungen 39 angeordnet sein, die an einer Vakuumanlage anliegen, um durch den damit hergestellten Unterdruck eine Fixierung der Abdeckschicht 27 bzw. des Verkleidungselementes 7 während des Einbringens des Kunststoffes für die Herstellung des Tragkörpers 8 zu ermöglichen.

Für den Fall, daß ein hochwiderstandsfähiger Sitzpolster 4 gewünscht ist, ist es selbstverständlich auch möglich, auch die Abdeckschicht 27, wie in Fig.4 mit strichlierten Linien angedeutet, mit einer Selbstklebeschicht 10 zu versehen, auf der eine weitere Schutzschicht 16, z.B. ein Gitter 17, aufgelegt werden kann, um auch eine Zerstörung des Sitzpolsters 4 von der der Sitzfläche 26 gegenüberliegenden Seite zu verhindern.

Abschließend sei noch darauf hingewiesen, daß selbstverständlich die Materialien für die einzelnen Lagen bzw. Schichten des Sitzpolsters beliebig gewählt werden können. So ist es unter anderem möglich, daß der Tragkörper 8 durch einen Formkaltschaum mit einem Raumgewicht von 40 kg/m³ bis 80 kg/m³ gebildet ist. Dieser kann zusätzlich, falls dies erwünscht ist, flammhemmend eingestellt sein und dazu mit pulverförmigen Flammschutzmitteln, beispielsweise bestehend aus einem Pulver aus Melaminharz und/oder Aluminiumhydroxyd und/oder Amonpolyphosphat versetzt sein.

Gleichermaßen kann der Kaschierschaum durch einen Polyesterschaum gebildet sein, der ein Raumgewicht zwischen 18 kg/m³ und 40 kg/m³ aufweisen kann. Auch dieser Polyesterschaum oder ein dafür auch verwendbarer Polyetherschaum kann beispielsweise mit einem pulverförmigen Flammschutzmittel versetzt und gegebenenfalls oder anstatt dessen mit einem flüssigen Flammschutzmittel getränkt sein.

Der Bezugstoff 15, der nach beliebigen Verfahren als Vlies, Flor, Gewirke oder dgl. hergestellt sein kann, kann ebenfalls flamm- bzw. brandhemmend eingestellt sein und beispielsweise aus 59 % Wolle, 30 % Baumwolle und 8 % Polyester gebildet sein. Es ist aber auch möglich Stoffe aus 81 % Baumwolle und 19 % Polyester zu verwenden.

Gleichermaßen ist auch die Ausbildung der Schutzschicht 16 beliebig abwandelbar. Diese kann aus Metall oder auch aus anderen hochschnittfesten Fasern bzw. Fäden, wie beispielsweise Kevlar, Keramik, Kohlenstoff, Polyester oder Glas gebildet sein.

Bei der Herstellung des Sitzpolsters 4 kann nun derart vorgegangen werden:
Es wird vorerst ein Verkleidungselement 7 hergestellt, in dem auf einem bevorzugt flammhemmenden bzw. brandhemmenden Bezugstoff 15 eine Schicht 14 zwischen 0,2 mm und 2 mm, bevorzugt 0,5 mm bis 1 mm Dicke, vorzugsweise eines Polyester- bzw. Polyetherschaums auf die von einer Sitzfläche 26 abgewendete Seite des Bezugstoffes 15 aufkaschiert wird. Dieser Kaschierschaum kann ein Raumgewicht von 18 kg/m³ bis 40 kg/m³ aufweisen. Auf der vom Bezugstoff 15 abgewendeten Seite des Kaschierschaums bzw. der Schicht 14 wird bevorzugt unter Zwischenschaltung einer Kleberschicht 13, die beispielsweise auch durch eine Schmelzfolie, z.B. eine PE-Folie, gebildet sein kann, eine flüssigkeitsdichte Sperrfolie 12, z.B. eine ein- oder beidseitig coronabehandelte Polyethylenfolie, aufgebracht, die auf der von der Schicht 14 abgewendeten Seite mit einer weiteren Kleberschicht 13 bzw. Selbstebeschicht 10 beschichtet sein kann. Auf diese Kleberschicht 13 wird bei der Herstellung des Verkleidungselementes 7 eine Abdeckfolie 33 aufgelegt.

Aus diesem Verkleidungselement 7, welches bevorzugt großflächig in Bahnen hergestellt wird, werden Rohzuschnitte für die einzelnen Sitzpolster 4 angefertigt.

Ein Rohzuschnitt eines derartigen Verkleidungselementes 7 wird dann in einen Formteil 37 eingelegt, sodaß er über einen Formhohlraum zwischen solchem Formteil 37 und solcher Formhälfte 38 allseitig vorragt und zwischen dem Formteil 37 und der Formhälfte 38 beim Schließen der Form eingespannt werden kann. Es ist aber auch möglich, am Formteil 37 außerhalb des Formhohlraumes, wie dies aus dem Stand der Technik bekannt ist, eigene Spannvorrichtungen vorzusehen. Das Verkleidungselement 7 wird nach dem Einlegen in den Formteil 37, beispielsweise durch Saugöffnungen 39 über Vakuum oder durch elektrostatische Aufladung oder dgl. positioniert und in Anlage an der Formfläche gehalten. Danach wird über den Bereich des Formhohlraumes die Abdeckfolie 33 entfernt und auf die freigelegte Kleberschicht 13 die entsprechend räumlich verformte Schutzschicht 16 bzw. das Gitter 17 oder Netz aus schnittfesten Fasern und Fäden bzw. Stäben aufgelegt und in Haftungsverbindung mit der Kleberschicht 13 gebracht.

Gleichzeitig wird auf der gegenüberliegenden Formhälfte 38, falls dies gewünscht wird, eine Abdeckschicht 27 ebenfalls über Saugöffnungen 39 über ein Vakuum fixiert und positioniert. Danach werden der Formteil 37 und die Formhälfte 38 aufeinandergesetzt, sodaß sie einen abgeschlossenen Formhohlraum zur Herstellung des Tragkörpers 8 bilden, und es wird über eine schematisch angedeutete Angußöffnung 40 der Kunststoffschaum zur Herstellung des Tragkörpers 8 in den Formhohlraum eingebracht.

Nach einer ausreichenden Verfestigung des Kunststoffschaums des Tragkörpers 8 wird der nunmehr vorgefertigte Sitzpolster 4 aus der Form 41 entnommen und kann dann auf einen Tragrahmen 28 eines Sitzes 1 montiert werden.

Ein Raumgewicht des Kunststoffschaums für das Stützelement 21, der insbesondere offenzellig sein kann, beträgt zwischen 40 kg/m³ und 150 kg/m³, bevorzugt 80 kg/m³ bis 130 kg/m³.

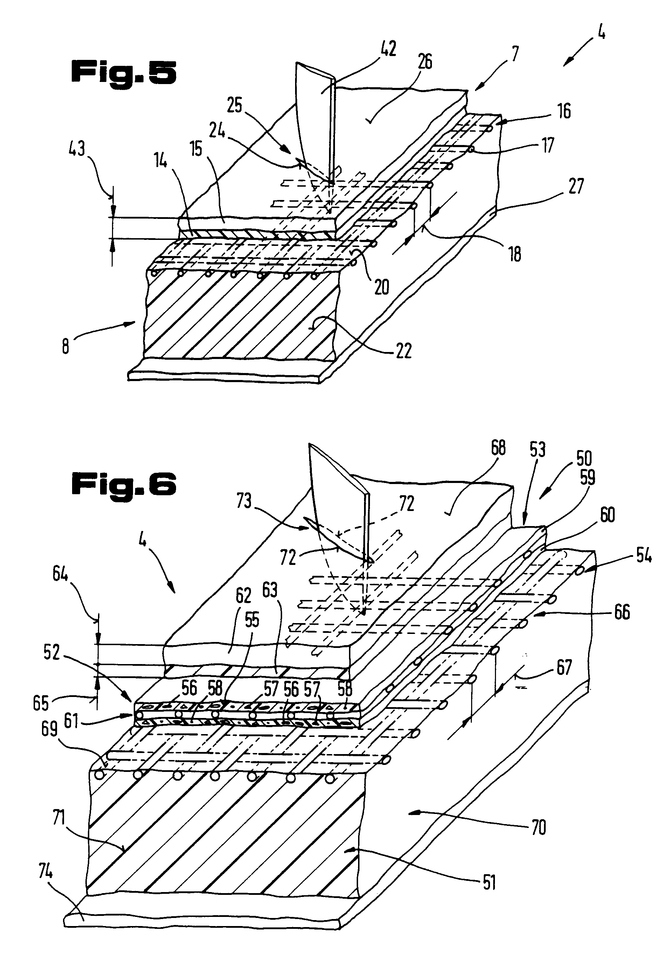

In der Fig.5 ist ein Teil des Sitzpolsters 4 in schematisch vereinfachter Darstellung gezeigt, wobei zum besseren Verständnis des Schichtaufbaues dieser mit gegeneinander versetzten Schichten dargestellt ist. Der Schichtaufbau des Sitzpolsters 4 unterscheidet sich von dem zuvor in der Fig.2 beschriebenen Schichtaufbau dadurch, daß der Bezugstoff 15 über die Schicht 14, welche als Kaschierschicht ausgebildet sein kann, direkt mit dem Tragkörper 8 verbunden ist und somit die zuvor beschriebe Zwischenschicht 11 wegfällt.

Weiters ist wiederum im Tragkörper 8 auf der der Sitzfläche 26 zugewandten Seite im Kunststoffschaum 22 die Schutzschicht 16 in Form des Gitters 17 mit seiner Maschenweite 18, welche zwischen 2 mm und 10 mm, bevorzugt 5 mm beträgt, angeordnet. Durch die Wahl der Maschenweite 18 kann die Querschnittsfläche über die der Bezugsstoff 15 mittels der Schicht 14 am Tragkörper 8 anhaftet, reguliert werden. Durch das Verhältnis zwischen der durch das Gitter bzw. Netz oder Gewirke aus Metall versteiften Querschnittsfläche und jener Querschnittsfläche, an der der Bezugstoff 15 über die Schicht 14 des Kaschierschaums direkt mit dem Schaumstoff 22 des Tragkörpers 8 verbunden ist, kann die Ablösekraft dadurch einfach variiert werden. Dadurch, daß sich der Schaum der Schicht 14 von den steifen Materialien der Schutzschicht 16 leichter löst, kann dadurch auf einfache Weise eine vordefinierte Ablöseebene geschaffen werden, von der sich der Schaumstoff der Schicht 14 mit dem Bezugstoff 15 leicht abhebt. Weiters wird durch die Größe der Maschenweite 18 verhindert, daß beim Ablösen des Bezugstoffs 15 vom Tragkörper 8 jene Schaumstoffteile des Kunststoffschaums 22, welcher zwischen den Maschen angeordnet ist, herausgerissen wird. Somit wird auf einfache Art und Weise eine glatte Trennebene bei einem schaumartigen Tragkörper 8 erzielt, die neben dem erzielten Verstärkungseffekt auch ein Ablösen von beschädigten Verkleidungselementen 7 ohne Zerstörung des Tragkörpers 8 ermöglicht. Somit erreicht man am Tragkörper 8 eine eben Auflagefläche 20, welche ausreicht, um ein entsprechend festes Anhaften eines neu aufzubringenden Verkleidungselements 7 zu gewährleisten.

Weiters ist auf der Sitzfläche 26 des Sitzpolsters 4 ein in den Bezugstoff 15 eingedrungener spitzer Gegenstand 42, wie z.B. ein Messer oder dgl. dargestellt, welcher nur bis zu der im Tragkörper 8 eingebetteten Schutzschicht 16 vordringen kann und somit ein wirksamer Schutz vor Zerstörung des Tragkörpers 8 gegeben ist. Durch eine geringe Dicke 43 der Schicht 14 und des Bezugsstoffs 15 ist ein Auseinanderklaffen der Schnittränder 24 des Schnittes 25, welcher durch den Gegenstand 42 erreicht wird, wirksam verhindert.

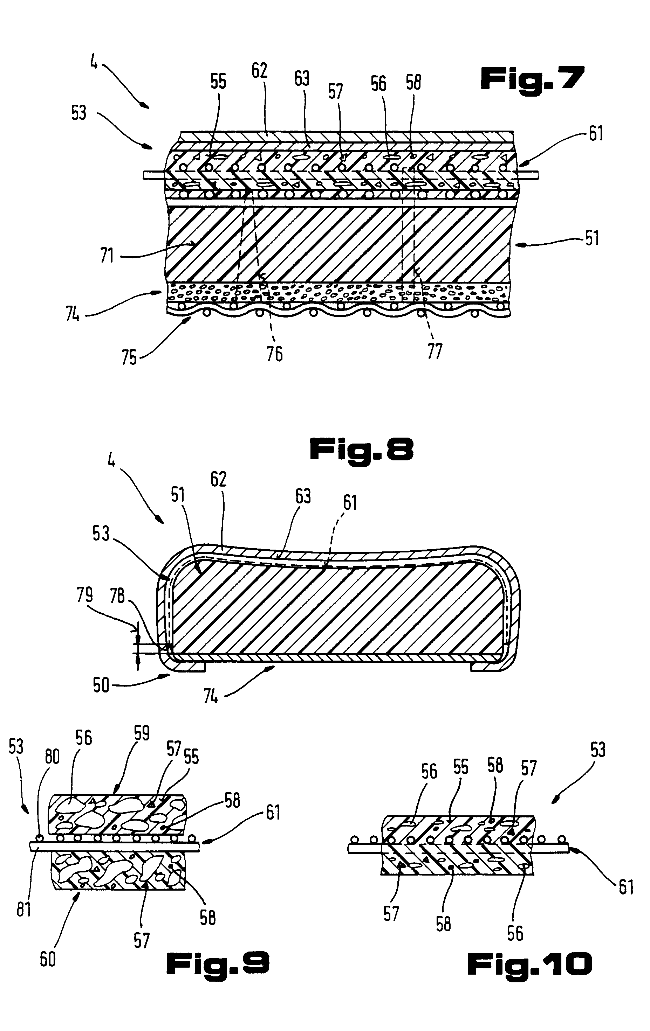

In Fig.6 ist ein Teil des Sitzpolsters 4 schematisch vereinfacht und zum besseren Verständnis des Schichtaufbaues mit gegeneinander versetzten Schichten dargestellt. Aus dieser Darstellung ist zu ersehen, daß der Sitzpolster 4 aus einem Verkleidungselement 50 und einem Tragkörper 51 besteht. Die Verbindung zwischen dem Verkleidungselement 50 und dem Tragkörper 51 erfolgt über eine lösbare Verbindungsvorrichtung 52. Auf diesem Tragkörper 51 ist eine Zwischenschicht 53 aufgebracht, die mit dem Tragkörper 51 bevorzugt unter gleichzeitiger Befestigung einer Schutzschicht 54 durch Anformung verbunden ist, in dem der Tragkörper 51 auf die Zwischenschicht 53 aufgeschäumt ist.

Diese Zwischenschicht 53 besteht aus einem Recyclingkunststoff, wozu in einen Schaumstoff 55, beispielsweise in einen PU-Weichschaum Füllstoffe 56 in Form von Schaumstoffgranulaten aus einem weichen Schaumstoff mit einer Korngröße von 2 mm bis 20 mm und weitere Füllstoffe 57, z.B. Korkgranulate, Gummigranulate, Kalziumkarbonat, Hattpolyurethanabfälle oder thermoplastische Kunststoffabfälle mit einer Korngröße von 2 mm bis 20 mm und als weiterer Füllstoff Kreide 58 im Schaumstoff 55 verteilt eingeschäumt ist.

Zwischen zwei Platten 59 und 60 ist eine weitere Schutzschicht 61, beispielsweise ein Gewebe, Gewirke, Geflecht oder Gitter bzw. Netz aus hochfesten und gegebenenfalls hochtemperaturfesten Fäden oder Fasern aus Metallen, Keramik, Kohle oder Glas eingebettet. Durch eine nachfolgende, thermische Verdichtung des mit den Füllstoffen 56,57 versehenen Kunststoffschaums werden die Zellstege erweicht und es werden die Platten 59,60 auf einen Bruchteil ihrer Dicke verdichtet, wobei das Raumgewicht vom freigeschäumten Raumgewicht zwischen 200 kg/m³ und 400 kg/m³, bevorzugt 320 kg/m³ auf 500 kg/m³ bis 1200 kg/m³, bevorzugt 600 kg/m³ bis 1000 kg/m³ verdichtet wird.

Dazu wird üblicher Weise dem Schaumstoff 55, also dem Gemisch des Rohmaterials für diesen Schaumstoff und den Füllstoffen 56 und 57 30 bis 60 Gewichtsteile Kreide 58 zugesetzt.

Während dieses Verdichtungsvorganges wird die Schutzschicht 61 voll in die Zwischenschicht 53 eingebettet, wobei gleichzeitig eine Formgebung der Zwischenschicht erfolgen kann. So ist es beispielsweise vorteilhaft, gegebenenfalls in dieser Zwischenschicht eine Sitzmulde auszuformen und kann dementsprechend auch die Schutzschicht 61 entsprechend räumlich vorverformt sein.

Besteht die Schutzschicht 61 aus Glas, Kohle oder Keramikfasern, so ist eine nahezu 100 %-ige Wiederverwertung bzw. ein Recycling von verbrauchten Zwischenschichten möglich. Ebenso wird auch beim Einstoßen von spitzen Gegenständen und dem nachfolgenden Herausziehen verhindert, daß spitze eventuell stechende Teile aus dem Innenraum der Zwischenschicht herausgezogen werden, sodaß nachfolgend Verletzungen von Nachbenützern vermieden werden.

Auf die Zwischenschicht 53 ist ein Bezugstoff 62 aufkaschiert. Eine Schicht 63 zum Aufkaschieren für den Bezugstoff 62 auf der Zwischenschicht 53 kann beispielsweise aus einem Polyethylenschaum, einem Polyester- oder Polystyrolschaum gebildet sein. Der Kunststoff dieser Schicht kann, wenn dies als notwendig oder vorteilhaft erachtet wird, mit einem Flammschutzmittel getränkt bzw. versetzt sein. Diese Schicht 63 ist auf einen Bezugstoff 62 bevorzugt durch einen während einer Formgebung desselben erfolgenden Kaschiervorgang unter Wärme- und Druckeinwirkung aufgebracht. Durch einen anschließend an die Kaschierung des Bezugstoffes 62 anschließenden weiteren Kaschiervorgang kann der Bezugstoff 62 direkt auf die Zwischenschicht 53 aufkaschiert und mit dieser vollflächig und kraftschlüssig verbunden werden.

Aufgrund der hohen Verdichtung der Zwischenschicht 53 und die dadurch geschlossene Oberfläche desselben bzw. der über 80 % liegende Anteil an geschlossenen Zellen bewirkt, daß eine Reißfestigkeit des Schaums der Schicht 63, also der Kaschierschicht geringer ist, als die Ausreißfestigkeit der Zwischenschicht 53.

Dies ermöglicht nun in überraschend einfacher Weise, daß bei einer Beschädigung des Sitzes durch einen Schnitt bzw. einen Stich mit einem scharfen Gegenstand oder dgl. der beschädigte Bezugstoff 62 mit der Kaschierschicht von der Zwischenschicht in einem Arbeitsvorgang abgezogen werden kann. Dabei ist lediglich darauf zu achten, daß eine Zerreißfestigkeit des Bezugstoffes 62 höher ist, als die Haftkraft der Kaschierschicht, also der Schicht 63 auf der Zwischenschicht 53.

Ein weiterer Vorteil dieser speziellen Zwischenschicht 53 liegt darin, daß durch die hohe thermische Verdichtung der Recyclingkunststoffmatten bestehend aus einem Schaumstoff 55 und in diesen eingebetteten Füllstoffen 56 und 57 sowie der Kreide 58 ein hohes inneres Rückstellvermögen der Zwischenschicht 53 erreicht wird, die bewirkt, daß nach einer Verletzung der Zwischenschicht und einer Trennung von Teilen derselben bzw. einem Auseinanderzwängen das Material bestrebt ist, durch die ihm innewohnende Elastizität und die beim Eindringen aufgebaute Verdrängungskraft wieder in seine ursprüngliche Lage elastisch zurückgeht und somit ein Einschnitt bzw. eine durch das Einstoßen von spitzen Gegenständen erzielte Öffnung sich wieder von selbst verschließt.

Dieser Effekt wird noch dadurch unterstützt, daß der gegebenenfalls unter Vorspannung aufkaschierte Bezugstoff 62 durch die beim Kaschiervorgang erfolgte Überdehnung auf die Oberfläche der Zwischenschicht 53 eine in Richtung der Verdichtung der Zwischenschicht 53 wirkende Druckkraft ausübt, die das Wiederverschließen von durch das Einstechen oder Eindringen von spitzen Gegenständen erzeugte Öffnungen unterstützt.

Durch diese Ausbildung und diese überraschende Lösung wird erreicht, daß Schnittstellen im Bezugstoff 62 nicht aufquellen, sondern sich nach dem Herausziehen des Schneidewerkzeuges von selbst aneinanderlegen und schließen.

Dabei ist zu berücksichtigen, daß eine Dicke 64 des Bezugstoffes 62 ca. 0,2 mm bis 3 mm Dicke aufweist. Eine Dicke 65 der Schicht 63, also der Kaschierschicht bzw. des Kaschierschaums zwischen dem Bezugstoff 62 und der Zwischenschicht 53 beträgt etwa 0,2 mm bis 2 mm, bevorzugt 1 mm.

Eine Schichtdicke der Zwischenschicht 53 inklusive der darin eingebetteten Schutzschicht 61 beträgt 0,5 cm bis 10 cm, bevorzugt 1 cm bis 5 cm, wobei die Schutzschicht 61 etwa mittig in Höhenrichtung der Zwischenschicht 53 gesehen angeordnet ist.

Selbstverständlich ist es aber auch möglich, daß die Schutzschicht 61 näher dem Tragkörper 51 bzw. dem Bezugstoff 62 angeordnet ist.

Dazu ist es auch möglich, daß die beidseits der Schutzschicht 61 angeordneten Platten 59, 60 eine unterschiedliche Dicke aufweisen bzw. unterschiedlich stark verdichtet sein können, um beispielsweise die elastische Rückfederung der Zwischenschicht 53 bei einer Verformung aus ihrer Plattenebene zusätzlich zu erhöhen.

Bevorzugt ist auch eine Maschenweite, falls als Schutzschicht 54 bzw. 61 ein Netz bzw. Gitter verwendet wird, relativ klein und bewegt sich zwischen 1 mm und 15 mm, bevorzugt 4 mm bis 8 mm. Diese Maschenweite verhindert nämlich ein tieferes Eindringen von spitzen Gegenständen, wie beispielsweise Messer in den Tragkörper und vor allem ein tiefer gehendes Einschneiden als bis auf Höhe der Schutzschicht 61 bzw. bei Extrembeanspruchungen, falls diese vorhanden ist, der Schutzschicht 54.

Als vorteilhaft hat es sich erwiesen, wenn die Fasern bzw. Fäden der Metallnetze oder Metallgewirke aus Federstahl bestehen bzw. Federstahlnetze oder Gewirke verwendet werden, sodaß der Rückstelleffekt nach einer durch einen Benutzer erfolgten Sitzbelastung bzw. der Federungseffekt verbessert wird. Dadurch soll auch das Zusammensinken des Kunststoffschaums des Tragkörpers 51 bei längerer Benutzungsdauer oder längerdauerndem Einsatz vermieden werden. Um einen möglichst hohen Sitzkomfort zu erreichten, ist es selbstverständlich auch möglich diese federnden Metallgewirke, -gitter oder -netze entsprechend der gewünschten Sitzform, beispielsweise mit einer Ausnehmung für die Sitzfläche räumlich zu verformen.

Der Tragkörper 51, der über die Verbindungsvorrichtung 52 mit dem Verkleidungselement 50 verbunden ist, besteht aus einer Schutzschicht 54, beispielsweise einem Gitter 66 aus Metall. Es kann jedoch auch ein Metallnetz bzw. ein Metallgewirke bzw. -gewebe verwendet werden, wobei das die Schutzschicht 54 bildende Bauelemente bevorzugt plastisch räumlich verformbar sein soll. Desweiteren ist es vorteilhaft, wenn diese Gitter bzw. Netze eine Maschenweite 67 aufweisen, die zwischen 1 mm und 15 mm, bevorzugt 4 mm bis 8 mm beträgt.

Die Schutzschicht 54 ist in eine einer Sitzfläche 68 des Sitzpolsters 4 zugewandte Auflagefläche 69 eines Stützelementes 70 des Tragkörpers 51 eingeschäumt, wobei ein Kunststoffschaum 71 - schematisch durch die Schraffur angedeutet - die Öffnungen im Gitter 66 bzw. Netz durchdringt und eine ebene Auflagefläche 69 mit den in Richtung des Verkleidungselementes 50 am weitesten vorragenden Teilen der Schutzschicht 54 bildet.

Diese Ausbildung des Tragkörpers 51 ermöglicht gleichzeitig aber auch eine kostengünstige Herstellung eines Sitzpolsters 4. Durch den Aufbau der Zwischenschicht 53 und der Schutzschicht 54 ist es nunmehr möglich, ohne einer nachteiligen Beeinflussung des Bezugstoffes 62 den Tragkörper 51 durch einen Schäum- bzw. Spritzvorgang direkt auf die Zwischenschicht 53 aufzubringen. Damit wird die Schutzschicht 54, nämlich das Gitter bzw. Netz aus Metall in den Kunststoffschaum 71 des Tragkörpers 51 eingebettet und bildet gleichzeitig eine verstärkte Randzone gegenüber der Zwischenschicht 53. Diese Zwischenschicht 53 hat neben der Abdichtung, die ein Eindringen des flüssig eingebrachten Schäummittels in den Bezugstoff 62 verhindert, auch noch den Vorteil, daß durch die Anordnung der Schicht 63 das Sitzgefühl und das Sitzklima durch eine Mindestelastizität angenehm gestaltet wird, ohne daß es beim Zerschneiden des Bezugstoffes 62 zu einem Aufplatzen desselben kommt und andererseits wird dadurch die auf den Bezugstoff 62 einwirkende Scheuerbelastung durch die Schutzschicht 61 und 54 erheblich verringert, sodaß ein Durchscheuern des Bezugstoffes 62 auch in den Kantenbereichen des Sitzpolsters 4 zuverlässig verhindert ist.

Bei entsprechender Auslegung der Haftungseigenschaften zwischen dem Tragkörper 51 und der Zwischenschicht 53 ist es möglich, die gesamte Zwischenschicht 53, falls diese bereits mehrfach durchschnitten oder durchtrennt oder beschädigt worden ist, vom Tragkörper 51 zu lösen. Diese überraschend vorteilhafte Lösung wird dadurch erreicht, daß die Randzone des Tragkörpers 51 durch das eingearbeitete Gitter 66 bzw. Netz oder Gewirke so verstärkt ist, daß lediglich ein Abheben der Randschichten des Tragkörpers 51 beim Abreißen der Zwischenschicht 53 erfolgt. Die Grundstruktur des Tragkörpers 51 wird durch die Schutzschicht 54 aufgrund der Verstärkung durch diese Schutzschicht 54 zurückgehalten. Dadurch, daß das Gitter 66 bzw. Netz oder Gewirke, welches nahe der Zwischenschicht 53 angeordnet ist, relativ engmaschig ist, ist die aufgetragene Schaumschicht zwischen dieser Schutzschicht 54 und der Zwischenschicht 53 sehr dünn und damit nicht sehr tragfähig, wodurch die Gesamthaftkraft zwischen dem Tragkörper 51 und der Zwischenschicht 53 so gering gehalten werden kann, daß beim Abreißen der Zwischenschicht 53 bzw. dem Ablösen, insbesondere durch die gleichzeitige Verstärkung des Oberflächenbereiches des Tragkörpers 51 durch die Schutzschicht 54 eine nahezu ebenflächige Trennung zwischen der Zwischenschicht 53 und dem Tragkörper 51 erreicht wird, sodaß nachfolgend eine neue Zwischenschicht gegebenenfalls mit bereits aufkaschiertem Bezugstoff 62 aufgebracht werden kann.

Diese Ausführungsvariante bietet daher den mehrfachen Vorteil, daß nach einer entsprechend starken Beschädigung des Bezugstoffes 62 nur der Bezugstoff 62 mit der Schicht 63, also der Kaschierschicht von der Zwischenschicht 53 abgetrennt werden kann, während bei einer zu starken Zerstörung der Zwischenschicht 53 dann auch die gesamte Zwischenschicht bis zum Tragkörper 51 entfernt und wieder neu aufgebracht werden kann, sodaß auch dann noch ein gewisser Anteil an wiederverwendbaren Materialien, nämlich der Tragkörper vorhanden bleibt und bei einer Zerstörung des Bezugstoffes 62 durch Vandalen oder bei übermäßiger Verschmutzung oder Abnutzung des Bezugstoffes 62 nur das Verkleidungselement 50 zu tauschen ist. Dadurch wird der Gesamtaufwand für solche insbesondere im Nahverkehr, in Bussen, U- und Schnellbahnen eingesetzte Sitzpolster 4 über längere Zeiträume betrachtet gering gehalten.

Dazu kommt, daß durch diese rasche Möglichkeit des Austausches übermäßig stark verschmutzte Verkleidungselemente 50 zwischendurch auch vom Tragkörper 51 abgelöst und zentral gereinigt werden können, um sie danach beispielsweise nach Aufbringen einer neuen Kleberbeschichtung als Selbstklebeschicht wieder auf einen Tragkörper 51 aufzubringen.

Gleichzeitig wird aber durch eine geringe Schichtdicke des Verkleidungselementes 50 ein Aufplatzen des Bezugstoffes 62 dann verhindert, wenn dieser mit scharfen Gegenständen 42 bzw. einem Messer aufgeritzt bzw. zerschnitten wird. Durch die geringe Dicke 64 im Bereich von 0,2 mm bis 3 mm, bevorzugt 0,5 mm bis 1 mm ist die elastische Vorspannkraft, die zu einem Hochheben des Bezugstoffes 62 an Schnitträndern 72 eines Schnittes 73 führt, so gering, daß die Schnittränder 72 des Schnittes 73 in einer zueinander im wesentlichen parallelen Lage verbleiben. Dazu kommt, daß durch die Schutzschicht 61 ein tiefes Eindringen auch von scharfen Gegenständen 42, wie Messer oder Schnittwerkzeugen und dgl. verhindert wird, wie dies im Bereich der Sitzfläche 68 schematisch angedeutet ist, sodaß auch bei größter Gewaltanwendung ein tieferes Zerstören der Struktur des Tragkörpers 51 und ein Freigeben der innewohnenden Elastizität verhindert ist. Dies nicht zuletzt dadurch, da auch der Schaumstoff 55 der Zwischenschicht 53 durch den Rückhalt über die ihm innewohnende Elastizität aufgrund der physikalischen Eigenschaften die Schutzschicht 54 die Schnittränder nicht in Richtung einer Sitzfläche 68 des Sitzpolsters hochdrückt, sondern in radialer Richtung der Beschädigung durch die innewohnenden Rückstellkräfte wieder verschließt.

Wie weiters aus der Darstellung in Fig.6 ersichtlich, kann der Tragkörper 51 auf der vom Verkleidungselement 50 abgewendeten Seite mit einer Abdeckschicht 74 z.B. aus einem Silikonkautschukschaum bzw. einer Recyclingkunststoffmatte versehen sein. Diese verhindert eine Abnutzung der von der Sitzfläche 68 abgewendeten Seite des Tragkörpers 51 bei seiner Auflage am Traggestell 2, sodaß die Schaumstruktur des Tragkörpers 51 nicht nach außen hin austreten kann, wodurch auch die flamm- bzw. brandhemmenden Eigenschaften des Sitzpolsters 4 verbessert werden können. Die Recyclingkunststoffmatte kann ähnlich, jedoch gegebenenfalls mit geringem Anteil an Kreide 58 und damit mit einem höheren Anteil an Füllstoffen 56, 57, wie die Zwischenschicht 53 ausgebildet sein. Gegebenenfalls ist es aufgrund der Beanspruchungsverhältnisse notwendig, das Raumgewicht dieser Recyclingkunststoffmatte, die die Abdeckschicht 74 bildet, höher zu wählen als bei der Zwischenschicht, um eine bessere Druckverteilung über die einzelnen Tragstäbe des Traggestells 2 und somit ein Durchsitzen des Sitzpolsters 4 in einzelnen Bereichen zu verhindern.

In Fig.7 ist der Sitzpolster nach Fig.6 in Stirnansicht gezeigt, wobei in Ergänzung zu den Ausführungen in Fig.6 noch zu ersehen ist, daß auf der von der Zwischenschicht 53 abgewendeten Seite der Abdeckschicht 74 ein Verstärkungsgewebe 75 in Form eines Netzes, Gitters, Gewirkes oder Vlieses aus hochbeanspruchbaren Fäden oder Fasern wie beispielsweise aus Graphit, Keramik, Glas oder Metall angeordnet sein können. Dieses Verstärkungsgewebe ermöglicht eine noch bessere Aufteilung der teilweise punktförmig auf den Sitzpolster 4 von unten bzw. über das Traggestell 2 einwirkenden Belastungen.

Des weiteren können zur besseren Durchlüftung eines derartigen Sitzpolsters 4 von der Abdeckschicht 74 her Ausnehmungen 76 bzw. 77 vorgesehen sein, die sich bis in den Bereich der zwischen dem Tragkörper 51 und der Zwischenschicht 53 befindlichen Schutzschicht 54 erstrecken.

Es ist aber auch möglich, die Ausnehmungen wie bei der Ausnehmung 77 gezeigt, bis in die Zwischenschicht 53, beispielsweise sogar bis zur Schutzschicht 61 vorragen zu lassen.

Bei der Darstellung der Zwischenschicht 53 ist schematisch angedeutet, daß beim thermischen Verformen des Schaumstoffes 55 mit den Füllstoffen 56 und 57 und der Weide 58 die Schutzschicht 61 vollflächig eingebettet wird. Dabei ist zu berücksichtigen, daß dazu eine Erwärmung sowohl in den Mittelbereichen der Platte als auch in den Randzonen gleichzeitig erfolgt, sodaß über die gesamte Dicke bzw. den gesamten Querschnitt der Platten eine gleiche thermische Crackung erfolgt. Gleichzeitig wird unter dieser thermischen Belastung eine entsprechend hohe Druckkraft auf die Zwischenschicht 53 ausgeübt, sodaß diese bis auf ihre vorgesehene Schicht mit dem entsprechenden Raumgewicht verdichtet wird.

In Fig.8 ist eine Ausführungsvariante eines Sitzpolsters 4 gezeigt, bei dem der Bezugstoff 62 über eine Schicht 63 direkt auf die Zwischenschicht 53 aufkaschiert ist. Des weiteren ist in diesem Fall nur in der Zwischenschicht 53 eine Schutzschicht 61 eingebettet, auf die der Tragkörper 51 bevorzugt direkt aufgeschäumt ist und diesen vor Zerstörungen schützt. Die Ausbildung auf der vom Bezugstoff 62 abgewandten Unterseite des Sitzpolsters 4 mit einer Abdeckschicht 74 kann wieder, wie beispielsweise bereits anhand Fig.6 und Fig.7 beschrieben, erfolgen.

Da die Zwischenschicht 53 durch die eingelegte Schutzschicht 61 verstärkt und vor allem bei auf diese in der Ebene der Zwischenschicht 53 einwirkende Belastungen relativ steif ist, ist es vorteilhaft, wenn eine umlaufende Stirnkanten 78 der Zwischenschicht 53 in einem Abstand 79 von einem Traggestell 2 bzw. dem Verkleidungselement 50 endet, sodaß bei einer durch einen Benutzer erfolgenden Belastung auf den Sitzpolster 4 von oben her durch das Zusammendrücken des Tragkörpers 51 bzw. der Verformung der Zwischenschicht 53 die stark versteifte Stirnkante 78 nicht gegen das Verkleidungselement 50 und das Traggestell 2 drückt und so gegebenenfalls den Bezugstoff 62 durchwetzt oder andere Teile des Sitzes 1 beschädigt.

In Fig.9 und 10 ist schematisch noch die Herstellung der Zwischenschicht 53 naher erläutert.

Aus dieser Darstellung ist zu ersehen, daß die Schutzschicht 61, bestehend aus einem Gitter, Gewirke, Netz, Vlies oder ähnlichem aus hochwiderstandsfähigen Fasern bzw. Fäden 80, 81 zwischen zwei Platten 59, 60 aus Schaumstoff 55 eingebettet wird. In diese Platten 59 und 60 ist neben dem das Stützgerüst bildenden Schaumstoff 55 ein Füllstoff 56 aus einem weichen Schaumstoff mit einer Korngröße von 2 mm bis 20 mm eingebracht. Es ist aber auch möglich, weitere Füllstoffe 57 in diese Mischung einzubringen, die beispielsweise aus Korkgranulat, Gummigranulat, Hartpolyurethanabfällen oder thermoplastischen Kunststoffabfälle in einer Korngröße von 2 mm bis 20 mm bestehen und ebenfalls in den Schaumstoff verteilt eingeschäumt sind. Zudem werden der Mischung 30 bis 60 Gewichtsteile Kreide 58 zugesetzt, und daraus bevorzugt ein Schaumblock hergestellt. Aus diesem Schaumblock werden die dargestellten Platten 59, 60 herausgeschnitten und zwischen diesen die Schutzschicht 61 eingelegt. Unter nachfolgender Temperatur- und Drukkeinwirkung, wobei die Temperatureinwirkung sowohl im Zentralbereich der Platten über hochfrequente Energiestrahlungen als auch an der Oberfläche durch entsprechend beheizte Formflächen eingebracht wird, ist es möglich das Raumgewicht der Platten 59, 60 von anfänglich etwa 250 kg/m³ bis 400 kg/m³ auf 500 kg/m³ bis 1200 kg/m³, bevorzugt 600 kg/m³ bis 1000 kg/m³ zu verdichten.

Bei dieser extrem starken Erhitzung, die zu einem Erweichen, Aufweichen bzw. Plastifizieren der Zellstege und der Füllstoffe 56 und 57 führt, wird eine so hohe Verdichtung und Kompaktierung erreicht, die ein vollflächiges, räumliches Einbetten der Schutzschicht 61 zwischen den beiden Platten 59 und 60 ermöglicht.

Abschließend sei noch darauf hingewiesen, daß selbstverständlich die Materialien für die einzelnen Lagen bzw. Schichten des Sitzpolsters beliebig gewählt werden können. So ist es unter anderem möglich, daS der Tragkörper 51 durch einen Formkaltschaum mit einem Raumgewicht von 40 kg/m³ bis 80 kg/m³ gebildet ist. Dieser kann zusätzlich, falls dies erwünscht ist, flammhemmend eingestellt sein und dazu mit pulverförmigen Flammschutzmitteln, beispielsweise bestehend aus einem Pulver aus Melaminharz und/oder Aluminiumhydroxyd und/oder Amonpolyphosphat versetzt sein.

Gleichermaßen kann der Kaschierschaum durch einen Polyesterschaum gebildet sein, der ein Raumgewicht zwischen 18 kg/m³ und 40 kg/m³ aufweisen kann. Auch dieser Polyesterschaum oder ein dafür auch verwendbarer Polyetherschaum kann beispielsweise mit einem pulverförmigen Flammschutzmittel versetzt und gegebenenfalls oder anstatt dessen mit einem flüssigen Flammschutzmittel getränkt sein.

Der Bezugstoff 62, der nach beliebigen Verfahren als Vlies, Flor, Gewirke oder dgl. hergestellt sein kann, kann ebenfalls flamm- bzw. brandhemmend eingestellt sein, und beispielsweise aus 59 % Wolle, 30 % Baumwolle und 8 % Polyester gebildet sein. Es ist aber auch möglich Stoffe aus 81 % Baumwolle und 19 % Polyester zu verwenden.

Gleichermaßen ist die Ausbildung der Schutzschichten 54, 61 beliebig abwandelbar und kann diese aus Metall oder auch aus anderen hochschnittfesten Fasern bzw. Fäden, wie beispielsweise Kevlar, Keramik, Kohlenstoff, Polyester oder Glas gebildet sein.

Bei der Herstellung eines Sitzpolsters 4 kann nun derart vorgegangen werden:
Es wird vorerst ein Verkleidungselement 51 hergestellt, in dem auf einen bevorzugt flammhemmenden bzw. brandhemmenden Bezugstoff 62 eine Schicht 63 zwischen 0,2 mm und 2 mm, bevorzugt 0,5 mm bis 1 mm Dicke, vorzugsweise eines Polyester- bzw. Polyetherschaums auf die von einer Sitzfläche abgewendete Seite des Bezugstoffes 62 aufkaschiert wird. Dieser Kaschierschaum kann ein Raumgewicht von 18 kg/m³ bis 40 kg/m³ aufweisen.

Aus diesem Verkleidungselement 50, welches bevorzugt großflächig in Bahnen hergestellt wird, werden Rohzuschnitte für die einzelnen Sitzpolster 4 angefertigt.

Ein Rohzuschnitt eines derartigen Verkleidungselementes 50 wird dann auf die vorgefertigte Zwischenschicht 53 aufkaschiert. Danach wird das Verkleidungselement 50 mit der Schutzschicht 53 in eine Form eingelegt und positioniert und in Anlage an der Formfläche gehalten.

Gleichzeitig wird auf der gegenüberliegenden Formhälfte, falls dies gewünscht wird, eine Abdeckschicht 74 z.B. ebenfalls über Saugöffnungen über ein Vakuum fixiert und positioniert. Danach werden der Formteil und die Formhälfte aufeinandergesetzt, sodaß sie einen abgeschlossenen Formhohlraum zur Herstellung des Tragkörpers 51 bilden und es wird über eine Angußöffnung der Kunststoffschaum zur Herstellung des Tragkörpers 51 in den Formhohlraum eingebracht.

Weiters können auch die Grundmaterialien zur Herstellung des Tragkörpers 8,51 aus Kunststoffschaum beliebig gewählt werden und durch Polyurethan, Polyester, Polyethylen oder dgl. gebildet sein.

Nur der Ordnung halber sei darauf hingewiesen, daß zum besseren Verständnis in den Zeichnungen vielfach die einzelnen Schichten bzw. Füllmaterialien, Füllstoffe, Schutzschichten, Gitter, Gewirke und Netze maßstäblich verzerrt und unproportional dargestellt wurden.

Diese für den Sitzpolster 4 beschriebenen Ausführungsvarianten sind in gleicher Weise auch ebenfalls auf den Rücken- bzw. Kopfpolster 5,6 anwendbar.

Die Erfindung ist bei der Herstellung der einzelnen Bauteile nicht auf die vorstehend beschriebenen Schaumstoffe beschränkt, sondern es können alle für den jeweiligen Einsatzzweck anwendbare Rohmaterialien bzw. Schaumstofftypen verwendet werden.

## Patentansprüche

1. Sitz, mit einem Sitzpolster (4) für öffentliche Verkehrsmittel, mit einem aus Kunststoffschaum (22) bestehenden Tragkörper (8), einem diesen umhüllenden Bezugstoff (15) und einer zwischen diesen angeordneten schnittfesten Schutzschicht (16), die mit dem Bezugstoff (15) und dem Tragkörper (8) bewegungsverbunden ist, dadurch gekennzeichnet, daß der Sitzpolster (4) aus dem Tragkörper (8) und einem Verkleidungselement (7) besteht, die über eine lösbare Verbindungsvorrichtung (9) miteinander verbunden sind und daß der Tragkörper (8) zumindest auf einer einer Sitzfläche (26) des Verkleidungselementes (7) zugewandten Auflagefläche (20) für dieses mit der Schutzschicht (16), insbesondere einem Gitter (17) bzw. Netz oder einem schnittfesten Gewebe bzw. Gewirke, versehen ist und das Verkleidungselement (7) aus dem Bezugstoff (15) sowie einer Zwischenschicht (11) aus zumindest einer flüssigkeitsdichten Sperrfolie (12) und zumindest auf einer Oberfläche derselben angeordneten Kleberschicht (13) gebildet ist

2. Sitz nach Anspruch 1, dadurch gekennzeichnet, daß zwischen dem Bezugstoff (15) und der Schutzschicht (16) eine weitere Zwischenschicht (11) aus Polyetherschaum und/oder einer feuchtigkeitsdichten Sperrfolie (12), insbesondere eine PE-oder PU-Folie angeordnet ist und daß die der Zwischenschicht (11) unmittelbar benachbart angeordnete Schutzschicht (16) vom Kunststoffschaum (22) des Tragkörpers (8) durchsetzt und über diesen in einem Formvorgang angeformt ist oder über die Kleberschicht (13) an dieser anhaftet.

3. Sitz nach Anspruch 1 oder 2, dadurch gekennzeichnet, daß die Kleberschicht (13) eine Selbstklebeschicht (10) ist.

4. Sitz nach einem oder mehreren der Ansprüche 1 bis 3, dadurch gekennzeichnet, daß die Schutzschicht (16) ein Netz bzw. Gitter (17) mit einer Maschenweite zwischen 2 mm und 10 mm, bevorzugt 5 mm ist und bevorzugt aus Federstahl besteht.

5. Sitz nach einem oder mehreren der Ansprüche 1 bis 4, dadurch gekennzeichnet, daß die Zwischenschicht (11) aus einer am Bezugstoff (15) aufgebrachten Kaschierschaumschicht, insbesondere aus Polyester und aus der feuchtigkeitsdichten Sperrfolie (12) mit der beidseits aufgebrachten Kleberschicht (13) gebildet ist.

6. Sitz nach einem oder mehreren der Ansprüche 1 bis 5, dadurch gekennzeichnet, daß der insbesondere brandhemmend ausgestattete Kaschierschaum eine Dicke von 0,2 mm bis 2 mm, bevorzugt 0,5 mm bis 1 mm, aufweist und z.B. aus einem Polyesterschaum besteht.

7. Sitz nach einem oder mehreren der Ansprüche 1 bis 6, dadurch gekennzeichnet, daß der Kaschierschaum ein Raumgewicht von 18 kg/m³ bis 40 kg/m³ aufweist.

8. Sitz nach einem oder mehreren der Ansprüche 1 bis 7, dadurch gekennzeichnet, daß die feuchtigkeitsdichte Sperrfolie (12) durch eine insbesondere beidseitig coronabehandelte Polyethylenfolie gebildet ist.

9. Sitz nach einem oder mehreren der Ansprüche 1 bis 8, dadurch gekennzeichnet, daß die Polyethylenfolie beidseitig mit Kleber oder einer Klebefolie und auf der vom Bezugstoff (15) abgewendeten Seite mit einer Abdeckfolie (33) beschichtet ist.

10. Sitz nach einem oder mehreren der Ansprüche 1 bis 9, dadurch gekennzeichnet, daß die Abdeckfolie (33) im Bereich der Sitzfläche (26) entfernt ist.

11. Sitz nach einem oder mehreren der Ansprüche 1 bis 10, dadurch gekennzeichnet, daß auf der vom Bezugstoff (15) abgewendeten Seite des Sitzpolsters (4) eine Abdeckschicht (27), insbesondere aus Silikonkautschukschaum angeordnet ist.

12. Sitz nach einem oder mehreren der Ansprüche 1 bis 11, dadurch gekennzeichnet, daß die Schutzschicht (16), insbesondere das Gitter (17) bzw. Netz bzw. Gewirke räumlich plastisch verformbar ausgebildet ist.

13. Sitz nach einem oder mehreren der Ansprüche 1 bis 12, dadurch gekennzeichnet, daß der Tragkörper (8) eine Stirnkante der Schutzschicht (16) allseitig überragt bzw. einbettet.

14. Sitz mit einem Sitzpolster (4) für öffentliche Verkehrsmittel, der in einem Traggestell (2) gehaltert ist und einen Tragkörper (51) aus Kunststoffschaum (71), insbesondere Formkaltschaum, eine schnitthemmende Schutzschicht (54, 61), eine elastisch verformbare Zwischenschicht (53) und einen Bezugstoff (62), der über eine Kaschier- oder Kleberschicht vollflächig mit der Oberfläche der Zwischenschicht (53) bewegungsverbunden ist aufweist, insbesondere nach einem oder mehreren der Ansprüche 1 bis 13, dadurch gekennzeichnet, daß die schnitthemmende Schutzschicht (61) in die Zwischenschicht (53) eingebettet ist und die Zwischenschicht (53) aus einem thermisch auf ein Raumgewicht zwischen 500 kg/m³ und 1200 kg/m³, bevorzugt 600 kg/m³ - 1000 kg/m³ verdichteten mit 30 - 60 Gewichtsteilen Kreide (58) gefülltem Kunststoffschaum (71) mit darin eingeschäumten Füllstoffen (56, 57) aus Recyclingkunststoffen gebildet ist.

15. Sitz nach Anspruch 14, dadurch gekennzeichnet, daß 30 - 60 Gewichtsteile der aus Schaumstoff (55), Recyclingkunststoffen und Füllstoff (56, 57) bestehenden Zwischenschicht (53) aus Füllmaterial, insbesondere Kreide (58) bestehen.

16. Sitz nach Anspruch 14 oder 15, dadurch gekennzeichnet, daß die Zwischenschicht (53) durch eine oder mehrere Platten (59, 60) aus Schaumstoff gebildet ist, in deren Schaumstoff (55) Schaumstoffgranulate aus einem weichen Schaumstoff mit einer Korngröße von 2 mm bis 20 mm und weitere Füllstoffe (57), wie Korkgranulat, Gummigranulat, Hartpolyurethanabfälle oder thermoplastische Kunststoffabfälle in einer Korngröße von 2 mm bis 20 mm und 30 bis 60 Gewichtsteile Kreide (58) verteilt eingeschäumt sind und das Freischaumgewicht der Platten (59, 60) 200 kg/m³ bis 400 kg/m³, bevorzugt 320 kg/m³ beträgt.

17. Sitz nach einem oder mehreren der Ansprüche 14 bis 16, dadurch gekennzeichnet, daß der Zwischenschicht (53) Flammschutzmittel, insbesondere Melaminharz und/oder Aluminiumhydroxid und/oder Ammoniumpolyphosphat zugesetzt sind.

18. Sitz nach einem oder mehreren der Ansprüche 14 bis 17, dadurch gekennzeichnet, daß der Schaumstoff (55) der Zwischenschicht (53) mit 5 bis 10 Gewichtsteilen flüssigem, z.B. chlor-, brom- oder phosphorhaltigem Flammschutzmittel versetzt ist und gegebenenfalls zusätzlich mit einem flüssigen Flammschutzmittel getränkt ist.

19. Sitz nach einem oder mehreren der Ansprüche 14 bis 18, dadurch gekennzeichnet, daß der Tragkörper (51) zumindest auf der der Sitzfläche (68) des Sitzes (1) zugewandten Oberfläche mit einer schnitthemmenden Schutzschicht (54) versehen ist.

20. Sitz nach einem oder mehreren der Ansprüche 14 bis 19, dadurch gekennzeichnet, daß die Schutzschicht (54, 61) aus einem Netz, Gewebe, Gewirke oder einem Gitter aus Fasern bzw. Fäden aus Glas oder aus Metall besteht.

21. Sitz nach einem oder mehreren der Ansprüche 14 bis 20, dadurch gekennzeichnet, daß die Schutzschicht (54) aus einem Gitter (66) oder Netz oder einem Gewebe bzw. Gewirke gebildet ist und vom Kunststoffschaum (71) des Tragkörpers (51) durchsetzt und über diesen in einem Formvorgang an der Zwischenschicht (53) angeformt ist.

22. Sitz nach einem oder mehreren der Ansprüche 14 bis 21, dadurch gekennzeichnet, daß die Fasern bzw. Fäden aus Metall aus Federdraht bzw. Federstahl bestehen.

23. Sitz nach einem oder mehreren der Ansprüche 14 bis 22, dadurch gekennzeichnet, daß eine Maschenweite (67) der Schutzschicht (54) bzw. des Netzes oder Gitters zwischen 1,5 mm und 10 mm, bevorzugt 4 mm beträgt und zumindest 10 - 30 % der Oberfläche, auf der die Zwischenschicht (53) aufliegt, durch die Schutzschicht (54) gebildet ist.

24. Sitz nach einem oder mehreren der Ansprüche 14 bis 23, dadurch gekennzeichnet, daß zumindest 80 % der dem Bezugstoff (62) bzw. dem Tragkörper (51) zugewandten Oberfläche der Zwischenschicht (53) geschlossenzellig ausgebildet ist.

25. Sitz nach einem oder mehreren der Ansprüche 14 bis 24, dadurch gekennzeichnet, daß eine Haftkraft der Kaschier- oder Kleberschicht zwischen der Zwischenschicht (53) und dem Bezugstoff (62) geringer ist, als eine Zerreißkraft des Bezugstoffes (62).

26. Sitz nach einem oder mehreren der Ansprüche 14 bis 25, dadurch gekennzeichnet, daß der Tragkörper (51) direkt auf die Zwischenschicht (53) aufgeschäumt ist.

27. Sitz nach einem oder mehreren der Ansprüche 14 bis 26, dadurch gekennzeichnet, daß die Kleberschicht zwischen der Zwischenschicht (53) und der Kaschierschicht bzw. dem Bezugstoff (62) durch eine Selbstklebeschicht gebildet ist, deren Haftkraft geringer ist, als eine Zerreißkraft des Bezugstoffes (62).

28. Sitz nach einem oder mehreren der Ansprüche 14 bis 27, dadurch gekennzeichnet, daß die Zwischenschicht (53) einen hohen, elastischen Material Rückstellkoeffizienten aufweist.

29. Verfahren zur Herstellung eines Sitzpolster (4) für einen Sitz (1), insbesondere in öffentlichen Verkehrsmitteln, bei dem ein mit einer feuchtigkeitsdichten Sperrfolie (12) beschichteter Bezugstoff (15) mit seiner von der Sperrfolie (12) abgewendeten Oberfläche auf eine Formfläche einer Form (41) aufgelegt, in der Form (41) positioniert und gehalten wird, worauf das flüssige Kunststoffmaterial zur Herstellung des Tragkörpers (8) in den Formhohlraum eingebracht und der Tragkörper (8) hergestellt wird, insbesondere nach einem oder mehreren der Ansprüche 1 bis 13, dadurch gekennzeichnet, daß nach dem Einlegen des Bezugstoffes (15) in einen Formteil (37) die Abdeckfolie (33) in einem im wesentlichen der Sitzfläche (26) entsprechenden Bereich von einer auf der feuchtigkeitsdichten Sperrfolie (12) aufgebrachten Kleberschicht (13) entfernt, darauf in diesem Bereich eine Schutzschicht (16), insbesondere das Gitter (17) bzw. Netz aus Metall, eingelegt wird, worauf der flüssige Kunststoffschaum (22) in die Form (41) eingebracht und der Tragkörper (8) hergestellt wird.

30. Verfahren nach Anspruch 29, dadurch gekennzeichnet, daß auf einer den Bezugstoff (15) aufnehmenden Formteil (37) gegenüberliegenden Formhälfte (38) eine Abdeckschicht (33), insbesondere aus Silikonkautschukschaum positioniert wird und das flüssige Kunststoffmaterial für den Tragkörper (8) zwischen die Schutzschicht (16) und die Abdeckschicht (27) eingebracht wird.

31. Verfahren nach Anspruch 29 oder 30, dadurch gekennzeichnet, daß nach dem Entnehmen des Sitzpolsters (4) aus der Form (41) der Bezugstoff (15) mit der Zwischenschicht (11) beschnitten wird.

32. Verfahren nach einem oder mehreren der Ansprüche 29 bis 31, dadurch gekennzeichnet, daß der Kunststoffschaum (22) des Tragkörpers (8) ein insbesondere offenzelliger Kunststoffschaum mit einem Raumgewicht zwischen 40 kg/m³ und 150 kg/m³, bevorzugt 80 kg/m³ bis 130 kg/m³, ist.

## Claims

1. Seat with a seat padding (4) for public transport, of the type comprising a supporting body (8) of plastic foam (22), an upholstery material (15) surrounding it and a cutting-resistant protective layer (16) arranged therebetween, which is movably connected to the upholstery material (15) and the supporting body (8), characterized in that the seat padding (4) consists of the supporting body (8) and a lining element (7), which are connected with each other by a removable connecting device (9), and in that the supporting body (8), at least on a bearing face (20) for the lining element, facing towards a seat surface (26) of said lining element (7), is provided with a protective layer (16), in particular a lattice (17) or respectively net or a cutting-resistant fabric or respectively knitted fabric, and that the lining element (7) is formed from the upholstery material (15) as well as an intermediate layer (11) of at least one fluid-tight barrier film (12) and an adhesive layer (13) arranged at least on one upper face of the same.

2. Seat according to Claim 1, characterized in that between the upholstery material (15) and the protective layer (16) a further intermediate layer (11) of polyether foam and/or a humidity-tight barrier film (12), in particular a PE- or PU-film, is arranged, and that the protective layer (16) arranged immediately adjacent to the intermediate layer (11) is penetrated with the plastic foam (22) of the supporting body (8) and by the latter is formed on in a forming process or via the adhesive layer (13) adheres to the latter.

3. Seat according to Claims 1 or 2, characterized in that the adhesive layer (13) is a self-adhesive layer (10).

4. Seat according to one or several of Claims 1 to 3, characterized in that the protective layer (16) is a net or respectively lattice (17) having a mesh width between 2 mm and 10 mm, preferably 5 mm, and preferably consists of spring steel.

5. Seat according to one or more of Claims 1 to 4, characterized in that the intermediate layer (11) is formed from a lamination foam layer, in particular of polyester applied to the upholstery material (15) and from the humidity-tight barrier film (12) with the adhesive layer (13) applied on both sides.

6. Seat according to one or more of Claims 1 to 5, characterized in that the lamination foam, in particular provided so as to be flame-retardant, has a thickness of 0.2 mm to 2 mm, preferably 0.5 mm to 1 mm, and consists, for example, of a polyester foam.

7. Seat according to one or more of Claims 1 to 6 characterized in that the lamination foam has a specific gravity of 18 kg/m³ to 40 kg/m³.

8. Seat according to one or more of Claims 1 to 7 characterized in that the humidity-tight barrier film (12) is formed by a polyethylene film treated with corona, in particular on both sides.

9. Seat according to one or more of Claims 1 to 8, characterized in that the polyethylene film is coated on both sides with an adhesive or an adhesive film and on the side facing away from the upholstery material (15) with a sealing film (33).

10. Seat according to one or more of Claims 1 to 9, characterized in that the sealing film (33) is removed in the region of the seat surface (26).

11. Seat according to one or more of Claims 1 to 10, characterized in that a covering layer (27), in particular of silicone rubber, is arranged on the side of the seat padding (4) facing away from the upholstery material (15).

12. Seat according to one or more of Claims 1 to 11, characterized in that the protective layer (16), in particular lattice (17) or respectively net or respectively knitted fabric is constructed so as to be spatially deformable plastically.

13. Seat according to one or more of Claims 1 to 12, characterized in that the supporting body (8) is projecting beyond or respectively embedding a front edge of the protective layer (16) on all sides.

14. Seat with a seat padding (4) for public transport, which is fixed in a supporting frame (2) and is equipped with a supporting body (51) of plastic foam (71), in particular cold-curing moulding foam, a cutting-resistant protective layer (54, 61), an elastically deformable intermediate layer (53) and an upholstery material (62) which is movably connected all over with the surface of the intermediate layer (53) by means of a lamination- or adhesive layer, in particular according to one or more of Claims 1 to 13, characterized in that the cutting-resistant protective layer (61) is embedded in the intermediate layer (53) and that the intermediate layer (53) is formed from a plastic foam (71) thermally compressed to a specific gravity between 500 kg/m³ and 1200 kg/m³, preferably 600 kg/m³ to 1000 kg/m³, and filled with 30 to 60 parts by weight of chalk (58), into which fillers (56, 57) of recycling plastic materials are foamed into.

15. Seat according to Claim 14, characterized in that 30 to 60 parts by weight of the intermediate layer (53), consisting of foamed material (55), recycling plastic materials and filler (56, 57), consist of filler, in particular chalk (58).

16. Seat according to Claim 14 or 15, characterized in that the intermediate layer (53) is formed by one or several plates (59, 60) of foamed material, into the foamed material (55) thereof foamed material granulates of a high-resilient foam material having a grain size of 2 mm to 20 mm and other fillers (57) such as cork granulate, rubber granulate, rigid polyurethane scrap or thermoplastic synthetic scrap of a grain size of 2 mm to 20 mm and 30 to 60 parts by weight of chalk (58) are foamed-in in dispersed form, and that the free-rising density of the plates (59, 60) is 200 kg/m³ to 400 kg/m³, preferably 320 kg/m³.

17. Seat according to one or more of Claims 14 to 16, characterized in that flame-retardants, in particular melamine resin and/or aluminium hydroxide and/or ammonium polyphosphate are added to the intermediate layer (53).

18. Seat according to one or more of Claims 14 to 17, characterized in that the foamed material (55) of the intermediate layer (53) is mixed with 5 to 10 parts by weight of liquid flame retardants containing, for example, chlorine, bromine or phosphorus, and if necessary, is additionally impregnated with a liquid flame retardant.

19. Seat according to one or more of Claims 14 to 18, characterized in that the supporting body (51), at least on the surface facing towards the seat surface (68) of the seat (1), is provided with a cutting-resistant protective layer (54).

20. Seat according to one or more of Claims 14 to 19, characterized in that the protective layer (54, 61) consists of a net, fabric, knitted fabric or a lattice of fibres or respectively threads of glass or of metal.

21. Seat according to one or more of Claims 14 to 20, characterized in that the protective layer (54) consists of a lattice (66) or net or a fabric or respectively knitted fabric and is dispersed with the plastic foam (71) of the supporting body (51) and by means of the latter is formed onto the intermediate layer (53) in a forming process.

22. Seat according to one or more of Claims 14 to 21, characterized in that the fibres or respectively threads are made of metal of spring wire or respectively spring steel.

23. Seat according to one or more of Claims 14 to 22, characterized in that a mesh width (67) of the protective layer (54) or respectively of the net or lattice is between 1.5 mm and 10 mm, preferably 4 mm, and that at least 10 to 30 % of the surface on which the intermediate layer (53) rests is formed by the protective layer (54).

24. Seat according to one or more of Claims 14 or 23, characterized in that at least 80 % of the surface of the intermediate layer (53), facing towards the upholstery material (62) or respectively the supporting body (51) is of the closed-cell type.

25. Seat according to one or more of Claims 14 to 24, characterized in that an adhesive force of the lamination- or adhesive layer between the intermediate layer (53) and the upholstery material (62) is smaller than a tearing resistance of the upholstery material (62).

26. Seat according to one or more or Claims 14 to 25, characterized in that the supporting body (51) is foamed directly onto the intermediate layer (53).

27. Seat according to one or more of Claims 14 to 26 characterized in that the adhesive layer between the intermediate layer (53) and the lamination layer or respectively the upholstery material (62) is formed by a self-adhesive layer, the adhesive force of which is smaller than the tearing resistance of the upholstery material (62).

28. Seat according to one or more of Claims 14 to 27, characterized in that the intermediate layer (53) has a high elastic restoring moment coefficient of material.

29. Method for the production of a seat padding (4) for a seat (1), in particular used in public transport, wherein an upholstery material (15) coated with a humidity-tight barrier film (12) is put with its upper face facing away from the barrier film (12) onto a moulding surface of a mould (41), is positioned and held in the mould (41), whereupon the liquid plastic material for the production of the supporting body (8) is inserted into the mould cavity and the supporting body (8) is produced, in particular according to one or more of Claims 1 to 13, characterized in that after inserting the upholstery material (15) into a shaped part (37) the sealing film (33) is removed in a region essentially corresponding to the seat surface (26) from the adhesive layer (13) applied to the humidity-tight barrier film (12), after which in this region a protective layer (16), in particular the lattice (17) or respectively net of metal, is inserted, whereupon the liquid plastic foam (22) is introduced into the mould (41) and the supporting body (8) is produced.

30. Method according to Claim 29, characterized in that on a mould half (38) opposite the moulding (37) which receives the upholstery material (15), a covering layer (33), in particular of silicone rubber, is positioned, and that the liquid plastic material for the supporting body (8) is inserted between the protective layer (16) and the covering layer (27).

31. Method according to Claim 29 or 30, characterized in that after the seat padding (4) has been taken out of the mould (41), the upholstery material (15) with the intermediate layer (11) is trimmed.

32. Method according to one or more of Claims 29 to 31, characterized in that the plastic foam (22) of the supporting body (8) is, in particular, an open-cell plastic foam having a specific gravity between 40 kg/m³ and 150 kg/m³, preferably 80 kg/m³ to 130 kg/m³.

## Revendications

1. Siège avec un rembourrage de siège (4) pour les moyens de transport public, avec un corps de support (8) réalisé en une mousse de matière synthétique (22), un tissu de revêtement (15) enveloppant celui-ci et une couche de protection (16) résistant à la découpe et disposée entre ceux-ci dont le mouvement est lié à celui du tissu de revêtement (15) et du corps de support (8), caractérisé en ce que le rembourrage de siège (4) est constitué du corps de support (8) et d'un élément de revêtement (7) qui sont reliés l'un à l'autre par un dispositif de liaison amovible (9), et en ce que le corps de support (8) est pourvu sur au moins une surface d'appui (20) orientée vers une surface de siège (26) de l'élément de revêtement (7) pour celui-ci d'une couche de protection (16), notamment d'une grille (17) ou d'un filet ou d'un tissu ou tricot résistant à la découpe, et en ce que l'élément de revêtement (7) est réalisé à partir du tissu de revêtement (15) ainsi que d'une couche intermédiaire (11) en au moins une feuille d'arrêt (12) étanche au liquide et au moins une couche de colle (13) disposée sur une surface de celle-ci.

2. Siège selon la revendication 1, caractérisé en ce qu'il est disposé entre le tissu de revêtement (15) et la couche de protection (16) une autre couche intermédiaire (11) en une mousse de polyéther et/ou une feuille d'arrêt étanche à l'humidité (12), notamment une feuille en PE ou PU, et en ce que la couche de protection (16) disposée au voisinage direct de la couche intermédiaire (11) est traversée par la mousse de matière synthétique (22) du corps de support (8) et est appliquée par formage au cours d'une étape de formage à celle-ci ou bien qu'elle adhère à celle-ci au moyen de la couche de colle (13).

3. Siège selon la revendication 1 ou 2, caractérisé en ce que la couche de colle (13) est une couche auto-collante (10).

4. Siège selon l'une ou plusieurs des revendications 1 à 3, caractérisé en ce que la couche de protection (16) est un filet ou une grille (17) avec une largeur de maille comprise entre 2 mm et 10 mm, de préférence de 5 mm et qu'elle est réalisée de préférence en acier à ressort.

5. Siège selon l'une ou plusieurs des revendications 1 à 4, caractérisé en ce que la couche intermédiaire (11) est formée par une couche de mousse laminée appliquée sur le tissu de revêtement (15) et constituée notamment de polyester et de la feuille d'arrêt (12) étanche à l'humidité pourvue de la couche de colle (13) appliquée aux deux côtés.

6. Siège selon l'une ou plusieurs des revendications 1 à 5, caractérisé en ce que la mousse de laminage notamment inhibitante en cas d'incendie a une épaisseur comprise entre 0,2 mm et 2 mm, de préférence entre 0,5 mm et 1 mm, et qu'elle est constituée par exemple en une mousse de polyester.

7. Siège selon l'une ou plusieurs des revendications 1 à 6, caractérisé en ce que la mousse de laminage a un poids spécifique de 18 kg/m³ à 40 kg/m³.

8. Siège selon l'une ou plusieurs des revendications 1 à 7, caractérisé en ce que la feuille d'arrêt (12) étanche à l'humidité est formée par une feuille de polyéthylène ayant notamment subi un traitement de corona sur les deux côtés.

9. Siège selon l'une ou plusieurs des revendications 1 à 8, caractérisé en ce que la feuille de polyéthylène est recouverte des deux côtés d'une colle ou d'une feuille collante et sur le côté éloigné du tissu de revêtement (15) d'une feuille de recouvrement (33).

10. Siège selon l'une ou plusieurs des revendications 1 à 9, caractérisé en ce que la feuille de recouvrement (33) est enlevée au voisinage de la surface de siège (26).

11. Siège selon l'une ou plusieurs des revendications 1 à 10, caractérisé en ce qu'il est disposé sur le côté éloigné du tissu de revêtement (15) du rembourrage de siège (4) une couche de recouvrement (27), notamment en une mousse de caoutchouc de silicone.

12. Siège selon l'une ou plusieurs des revendications 1 à 11, caractérisé en ce que la couche de protection (16), notamment la grille (17) ou le filet ou le tricot est réalisé de façon déformable spatialement et plastiquement.

13. Siège selon l'une ou plusieurs des revendications 1 à 12, caractérisé en ce que le corps de support (8) fait saillie sur ou noie de tous côtés une arête frontale de la couche de protection (16).

14. Siège avec un rembourrage de siège (4) pour des moyens de transport public, qui est retenu dans un châssis de support (2) et qui présente un corps de support (51) en mousse de matière plastique (71), notamment en mousse formée à froid, une couche de protection (54, 61) résistant à une découpe, une couche intermédiaire (53) déformable élastiquement et un tissu de revêtement (62) qui est relié, quant à son mouvement, par une couche de laminage ou de colle sur toute la surface avec la surface de la couche intermédiaire (53), notamment selon l'une ou plusieurs des revendications 1 à 13, caractérisé en ce que la couche de protection (61) résistant à la découpe est noyée dans la couche intermédiaire (53), et que la couche intermédiaire (53) est formée en une mousse de matière plastique (71) compactée thermiquement à un poids spécifique compris entre 500 kg/m³ et 1200 kg/m³, de préférence entre 600 kg/m³-1000 kg/m³, remplie de 30 à 60 parties en poids de craie (58), et dans laquelle sont introduites par moussage des matières de remplissage (56, 57) en des matières plastiques de recyclage.

15. Siège selon la revendication 14, caractérisé en ce que 30 à 60 parties en poids de la couche intermédiaire (53) constituée de la matière en mousse (55), des matières plastiques de recyclage et de la matière de remplissage (56, 57) sont constituées de matériaux de remplissage, notamment de craie (58).

16. Siège selon la revendication 14 ou 15, caractérisé en ce que la couche intermédiaire (53) est formée par une ou plusieurs plaques (59, 60) en mousse, dans la mousse (55) de laquelle on a introduit par moussage suivant une répartition des granulés de mousse en une mousse souple d'une grosseur de grains de 2 mm à 20 mm ainsi que d'autres matières de remplissage (57), comme des granulés de liège, des granulés de caoutchouc, des déchets de polyuréthane dur ou des déchets de matières synthétiques thermoplastiques en une grosseur de grain de 2 mm à 20 mm et de 30 à 60 parties en poids de craie (58), et en ce que le poids de mousse libre des plaques (59, 60) est de 200 kg/m³ à 400 kg/m³, de préférence de 320 kg/m³.

17. Siège selon l'une ou plusieurs des revendications 14 à 16, caractérisé en ce que des moyens pare-flammes, notamment de la résine de mélamine et/ou de l'hydroxyde d'aluminium et/ou du polyphosphate d'ammonium sont rajoutés à la couche intermédiaire (53).

18. Siège selon l'une ou plusieurs des revendications 14 à 17, caractérisé en ce que la mousse (55) de la couche intermédiaire (53) est mélangée avec 5 à 10 parties en poids d'un agent pare-flammes liquide, contenant par exemple du chlore, du brome ou du phosphore et qu'elle est imprégnée le cas échéant en plus d'un agent pare-flammes liquide.

19. Siège selon l'une ou plusieurs des revendications 14 à 18, caractérisé en ce que le corps de support (51) est pourvu au moins sur la surface orientée vers la surface de siège (68) du siège (1) d'une couche de protection (54) résistant à la découpe.

20. Siège selon l'une ou plusieurs des revendications 14 à 19, caractérisé en ce que la couche de protection (54, 61) est constituée d'un filet, d'un tissu, d'un tricot ou bien d'un treillis en fibres ou fils en verre ou en métal.

21. Siège selon l'une ou plusieurs des revendications 14 à 20, caractérisé en ce que la couche de protection (54) est formée par une grille (66) ou un filet ou un tissu ou tricot et qu'elle contient la mousse de matière synthétique (71) du corps de support (51) et qu'elle est formée par celle-ci en une opération de formage sur la couche intermédiaire (53).

22. Siège selon l'une ou plusieurs des revendications 14 à 21, caractérisé en ce que les fibres ou fils sont réalisés en métal en fil à ressort ou en acier à ressort.

23. Siège selon l'une ou plusieurs des revendications 14 à 22, caractérisé en ce qu'une largeur de maille (67) de la couche de protection (54) ou du filet ou de la grille est comprise entre 1,5 mm et 10 mm, et qu'elle est de préférence de 4 mm, et qu'au moins 10-30% de la surface sur laquelle repose la couche intermédiaire (53) sont formés par la couche de protection (54).

24. Siège selon l'une ou plusieurs des revendications 14 à 23, caractérisé en ce qu'au moins 80% de la surface orientée vers le tissu de revêtement (62) ou le corps de support (51) de la couche intermédiaire (53) sont réalisés avec des alvéoles fermées.

25. Siège selon l'une ou plusieurs des revendications 14 à 24, caractérisé en ce qu'une force d'adhésion de la couche de laminage ou de colle entre la couche intermédiaire (53) et le tissu de revêtement (62) est plus faible qu'une force de déchirage du tissu de revêtement (62).

26. Siège selon l'une ou plusieurs des revendications 14 à 25, caractérisé en ce que le corps de support (51) est moussé directement sur la couche intermédiaire (53).

27. Siège selon l'une ou plusieurs des revendications 14 à 26, caractérisé en ce que la couche de colle entre la couche intermédiaire (53) et la couche de laminage ou le tissu de revêtement (62) est formée par une couche auto-collante dont la force d'adhésion est plus faible qu'une force de déchirage du tissu de revêtement (62).

28. Siège selon l'une ou plusieurs des revendications 14 à 27, caractérisé en ce que la couche intermédiaire (53) a un coefficient élevé de rappel de matière élastique.

29. Procédé de fabrication d'un rembourrage de siège (4) pour un siège (1), notamment dans des moyens de transport public, selon lequel un tissu de revêtement (15) recouvert d'une feuille d'arrêt (12) étanche à l'humidité est appliqué par sa surface éloignée de la feuille d'arrêt (12) sur une face de formage d'un moule (41), est positionné et maintenu dans le moule (41), à la suite de quoi la matière synthétique liquide est introduite pour la fabrication du corps de support (8) dans l'espace creux du moule et le corps de support (8) est fabriqué, notamment selon l'une ou plusieurs des revendications 1 à 13, caractérisé en ce que, après avoir mis en place le tissu de revêtement (15) dans une partie de moule (37), la feuille de recouvrement (33) est enlevée dans une zone correspondant sensiblement à la surface de siège (26) d'une couche de colle (13) appliquée sur la feuille d'arrêt étanche à l'humidité (12), qu'on introduit ensuite dans cette zone une couche de protection (16), notamment la grille (17) ou le filet en métal, à la suite de quoi la mousse de matière synthétique liquide (22) est introduite dans le moule (41) et le corps de support (8) est fabriqué.

30. Procédé selon la revendication 29, caractérisé en ce qu'on positionne sur une moitié de moule (38) opposée à la partie de moule (37) recevant le tissu de revêtement (15) une couche de recouvrement (33), notamment en mousse de caoutchouc de silicone, et en ce qu'on introduit la matière synthétique liquide pour le corps de support (8) entre la couche de protection (16) et la couche de recouvrement (27).

31. Procédé selon la revendication 29 ou 30, caractérisé en ce qu'après avoir enlevé le rembourrage de siège (4) du moule (41), le tissu de revêtement (15) avec la couche intermédiaire (11) est recoupé.

32. Procédé selon l'une ou plusieurs des revendications 29 à 31, caractérisé en ce que la mousse de matière synthétique (22) du corps de support (8) est une mousse de matière synthétique notamment à alvéoles ouverts avec un poids spécifique compris entre 40 kg/m³ et 150 kg/m³, de préférence entre 80 kg/m³ et 130 kg/m³.
